# EUROPEAN PATENT APPLICATION

(11) **EP 4 509 536 A1**
(43) Date of publication of application: **19.02.2025**
(21) Application number: 23855189.9
(22) Date of filing: 18.08.2023
(51) Int. Cl.: C08F 110/02, C08F 4/659, C08F 4/6592, C08L 23/06

(54) **POLYETHYLENE AND PREPARATION METHOD OF SAME**

(30) Priority: 18.08.2022 KR 20220103613
(71) Applicant: LG Chem, Ltd., Yeongdeungpo-gu Seoul 07336 (KR)
(72) Inventor: LEE, Jinseok, Daejeon 34122 (KR); LEE, Seung Muk, Daejeon 34122 (KR); KIM, Myung Jin, Daejeon 34122 (KR); CHO, Joon Hee, Daejeon 34122 (KR)
(74) Representative: Hoffmann Eitle
(86) International application number: PCT/KR2023/012280
(87) International publication number: WO 2024/039223

(57) **Abstract**

The present disclosure provides a polyethylene having excellent compatibility with recycled polyethylene and improved mechanical properties, and a preparation method of the same.

## Description

### [TECHNICAL FIELD]

### CROSS-REFERENCE TO RELATED APPLICATION(S)

This application claims the benefit of Korean Patent Applications No. 10-2022-0103613 filed on August 18, 2022, and No. 10-2023-0108100 filed on August 18, 2023 with the Korean Intellectual Property Office, the disclosures of which are incorporated herein by reference in their entirety.

The present disclosure relates to a polyethylene having excellent compatibility with recycled polyethylene and improved mechanical properties, and a preparation method of the same.

### [BACKGROUND OF ART]

Polyethylene resins are increasingly in demand and are used in a variety of applications. With the demand for high-performance polyethylene for relatively new plastics, polymerization processes have been developed to support the production of new polymeric materials.

Olefin polymerization catalyst systems may be generally divided into Ziegler-Natta and metallocene catalysts, and these highly active catalyst systems have been developed in accordance with their characteristics. Ziegler-Natta catalyst has been widely applied to commercial processes since it was developed in the 1950' s. However, since the Ziegler-Natta catalyst is a multi-active site catalyst in which a plurality of active sites are mixed, it has a feature that a resulting polymer has a broad molecular weight distribution. Also, since a compositional distribution of comonomers is not uniform, there is a problem that it is difficult to obtain desired physical properties.

Meanwhile, the metallocene catalyst includes a main catalyst having a transition metal compound as a main component and an organometallic compound cocatalyst having aluminum as a main component. Such a catalyst is a single-site catalyst which is a homogeneous complex catalyst, and offers a polymer having a narrow molecular weight distribution and a uniform compositional distribution of comonomers, due to the single site characteristics. The stereoregularity, copolymerization characteristics, molecular weight, crystallinity, etc. of the resulting polymer may be controlled by changing a ligand structure of the catalyst and polymerization conditions.

US Patent No. 5,914,289 discloses a method for controlling a molecular weight and a molecular weight distribution of polymers using metallocene catalysts which are respectively supported on supports. However, a large amount of solvent and a long period of time are required to prepare the supported catalysts, and a process of supporting metallocene catalysts on the respective supports is troublesome.

Korean Patent Application No. 2003-12308 discloses a method for controlling molecular weight distributions of polymers, in which the polymerization is performed while changing a combination of catalysts in a reactor by supporting a dinuclear metallocene catalyst and a mononuclear metallocene catalyst on a support together with an activating agent. However, this method has limitations in simultaneously realizing the characteristics of respective catalysts. In addition, there is a disadvantage that the metallocene catalysts are released from a supported component of the resulting catalyst to cause fouling in the reactor.

Meanwhile, as interest in environmental issues grows, regulations to suppress carbon dioxide emissions are being strengthened. In particular, as environmental pollution due to increased use of plastics has become a serious problem, regulations at the manufacturing stage are being strengthened, such as mandating the use of recycled resins, especially in the United States.

However, since the recycled resin is a resin that has already been processed, its properties have already changed through a high-temperature processing process. Accordingly, it has a problem of significantly lower impact strength, tensile strength, chemical resistance, and thermal stability compared to existing virgin resins. In order to solve this problem, a method of adding a predetermined amount of the virgin resin in a composition containing recycled resins has been attempted. However, in order to minimize the deterioration of mechanical properties by the above method, an excessive amount of the virgin resin is required, and the problem of deterioration of major physical properties such as environmental stress cracking resistance (ESCR) is still not solved. Moreover, as the number of processing increases, this problem becomes more serious.

### [DETAILED DESCRIPTION OF THE INVENTION]

### [Technical Problem]

In the present disclosure, there is provided a polyethylene with improved mechanical properties while having excellent compatibility with recycled polyethylene.

In the present disclosure, there is also provided a preparation method of the above-described polyethylene.

In the present disclosure, there is also provided a polyethylene composition including the above-described polyethylene and a recycled polyethylene resin (PCR).

### [Technical Solution]

In the present disclosure, there is provided a polyethylene satisfying the following conditions: an integral value in a region where Log Mw is 5.0 or more in a GPC curve graph having an x-axis of log Mw and a y-axis of dw/dlogMw is 60% or more of a total integral value, a molecular weight distribution (Mw/Mn) is 7 or more, and a weight average molecular weight is 300000 g/mol or more.

In the present disclosure, there is also provided a preparation method of the above-described polyethylene.

In the present disclosure, there is also provided a polyethylene composition including the above-described polyethylene and a recycled polyethylene resin (PCR).

### [ADVANTAGEOUS EFFECTS]

According to the present disclosure, it is possible to provide a polyethylene with improved mechanical properties while having excellent compatibility with recycled polyethylene by strengthening a high molecular region ratio and maintaining a low molecular region ratio in the molecular structure to optimize both the molecular weight distribution and the weight average molecular weight.

### [DETAILED DESCRIPTION OF THE EMBODIMENTS]

In the present disclosure, the terms "the first", "the second", and the like are used to describe a variety of components, and these terms are merely employed to distinguish a certain component from other components.

The terminology used herein is for the purpose of describing particular embodiments only and is not intended to be limiting of the invention. The singular forms are intended to include the plural forms as well, unless the context clearly indicates otherwise. It will be further understood that the terms "include", "have", or "contain" when used in this specification, specify the presence of stated features, numbers, steps, components, or combinations thereof, but do not preclude the presence or addition of one or more other features, numbers, steps, components, or combinations thereof.

The terminology "about" or "substantially" is intended to have meanings close to numerical values or ranges specified with an allowable error and intended to prevent accurate or absolute numerical values disclosed for understanding of the present invention from being illegally or unfairly used by any unconscionable third party.

For reference, "part by weight" as used herein refers to a relative concept of a ratio of the weight of the remaining material based on the weight of a specific material. For example, in a mixture containing 50 g of material A, 20 g of material B, and 30 g of material C, the amounts of material B and C based on 100 parts by weight of material A are 40 parts by weight and 60 parts by weight, respectively.

In addition, "wt% (% by weight)" refers to an absolute concept of expressing the weight of a specific material in percentage based on the total weight. In the above-described mixture, the contents of material A, B and C based on 100% of the total weight of the mixture are 50 wt %, 20 wt % and 30 wt %, respectively. At this time, a sum of contents of each component does not exceed 100 wt%.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present disclosure will be described in detail.

According to one embodiment of the present disclosure, there is provided a polyethylene in which both the molecular weight distribution and the weight average molecular weight are optimized while strengthening a high molecular region ratio and maintaining a low molecular region ratio in the molecular structure in order to improve mechanical properties such as environmental stress cracking resistance (ESCR) along with excellent compatibility with recycled polyethylene.

Specifically, the polyethylene of the present disclosure has an integral value in a region where Log Mw is 5.0 or more in a GPC curve graph having an x-axis of log Mw and a y-axis of dw/dlogMw of 60% or more of a total integral value, a molecular weight distribution (Mw/Mn) of 7 or more, and a weight average molecular weight of 300000 g/mol or more.

Specifically, the polyethylene may effectively improve mechanical properties such as environmental stress cracking resistance (ESCR) along with excellent compatibility with recycled polyethylene by using a catalyst containing three or more specific metallocene compounds to optimize both the molecular weight distribution and the weight average molecular weight while strengthening a high molecular region ratio and maintaining a low molecular region ratio in the molecular structure.

Hereinafter, the polyethylene of the present disclosure will be described in more detail.

The polyethylene of the present disclosure may comprise an ethylene homopolymer or an ethylene/alpha-olefin copolymer.

The alpha-olefin may be at least one selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicocene, and a mixture thereof.

For example, the polyethylene according to the present disclosure may not contain the above-mentioned alpha-olefin or may contain 10 wt% or less of the alpha-olefin. That is, the alpha-olefin may be contained in an amount of 0 to 10 wt%. Specifically, the alpha-olefin may be contained in an amount of 8 wt% or less, 6.5 wt% or less, 5 wt% or less, 4.5 wt% or less, 4 wt% or less, 3.5 wt% or less, 3 wt% or less, 2.5 wt% or less, 2.2 wt% or less, 2 wt% or less, 1.8 wt% or less, or 1.5 wt% or less, but is not limited thereto. In addition, when the polyethylene is an ethylene/alpha-olefin copolymer, the alpha-olefin may be contained in an amount of 0.1 wt% or more, 0.3 wt% or more, 0.5 wt% or more, 0.7 wt% or more, 0.85 wt% or more, 0.9 wt% or more wt% or more, 1.0 wt% or more, or 1.2 wt% or more, but is not limited thereto.

For example, when the polyethylene according to the present disclosure is a copolymer, 1-hexene or 1-butene can be used as the alpha-olefin copolymerized with ethylene, and more specifically, 1-hexene can be used.

Meanwhile, the polyethylene according to the present disclosure has an integral value in the region where Log Mw is 5.0 or more in a GPC curve graph having an x-axis of log Mw and a y-axis of dw/dlogMw of 60% or more, or 60% or more and less than 90% of the total integral value.

Specifically, the integral value in the region where Log Mw is 5.0 or more may be 60% or more, 62% or more, 63% or more, 64% or more, 65% or more, 66% or more, 68% or more, 70% or more, 72% or more, or 74% or more to ensure excellent mechanical properties when mixing the polyethylene with recycled polyethylene. However, considering compatibility with the recycled polyethylene, the integral value in the region where Log Mw is 5.0 or more may be less than 90%, 89% or less, 88% or less, 85% or less, 82% or less, 80% or less, 79% or less, 78% or less, 77% or less, 76% or less, or 75% or less.

When having the above-described integral value in the region where Log Mw is 5.0 or more, mechanical properties such as environmental stress cracking resistance (ESCR) along with excellent compatibility with recycled polyethylene can be improved while strengthening a high molecular region ratio in the molecular structure of polyethylene. In particular, by strengthening the high molecular region ratio in the molecular structure of polyethylene, the degradation of major physical properties such as ESCR can be minimized without using excessive amounts of virgin polyethylene resins when mixed with recycled polyethylene.

Further, in the GPC curve graph having an x-axis of log Mw and a y-axis of dw/dlogMw, the polyethylene may have an integral value in the region where Log Mw is 4.0 or less of 20% or less and 10% or more of the total integral value. When satisfying the above integral value in the region where Log Mw is 4.0 or less, which corresponds to the low molecular weight region in the molecular structure of polyethylene, compatibility with recycled polyethylene can be improved.

Specifically, the integral value in the region where Log Mw is 4.0 or less may be 10% or more, 10.5% or more, 11% or more, 11.5% or more, 12% or more, 13% or more, 14% or more, 15% or more, or 15.5% or more to ensure excellent compatibility when mixing the polyethylene with recycled polyethylene. However, the integral value in the region where Log Mw is 4.0 or less may be 20% or less, 19.5% or less, 19% or less, 18.5% or less, 18% or less, 17.5% or less, 17% or less, 16.5% or less, or 16% or less to improve mechanical properties of recycled polyethylene.

When having the above-described integral value in the region where Log Mw is 4.0 or less, the low molecular weight region in the molecular structure of polyethylene is optimized and thus mechanical properties such as environmental stress cracking resistance (ESCR) can be improved while maintaining excellent compatibility with recycled polyethylene.

In the polyethylene of the present disclosure, the sum of an integral value in the region where Log Mw is 5.0 or more and an integral value in the region where Log Mw is 4.0 or less becomes less than 100% in the GPC curve graph having an x-axis of log Mw and a y-axis of dw/dlogMw. Specifically, the sum of an integral value in the region where Log Mw is 5.0 or more and an integral value in the region where Log Mw is 4.0 or less may be 98% or less, 96% or less, 94% or less, 93% or less, 92% or less, 91% or less, 90% or less, 89% or less, 88% or less, or 87% or less.

As described above, the polyethylene of the present disclosure may have an optimized molecular weight distribution (MWD, Mw/Mn) while strengthening a high molecular region ratio and maintaining a low molecular region ratio in the molecular structure.

Specifically, the polyethylene may have a molecular weight distribution (Mw/Mn) of 7 or more or 7 to 13. Preferably, the molecular weight distribution (Mw/Mn) of the polyethylene may be 7.5 or more, 8 or more, 8.5 or more, 8.8 or more, 9 or more, 9.2 or more, 9.3 or more, 9.5 or more, or 9.8 or more, or 10 or more, and 12.8 or less, 12.5 or less, 12.3 or less, 12 or less, 11.8 or less, 11.5 or less, 11.4 or less, or 11.2 or less.

When having the above-described molecular weight distribution (Mw/Mn), the polyethylene may improve mechanical properties such as environmental stress cracking resistance (ESCR) along with excellent compatibility with recycled polyethylene while strengthening a high molecular region ratio and maintaining a low molecular region ratio in the molecular structure. In particular, the molecular weight distribution (Mw/Mn) of polyethylene should be 7 or more to improve compatibility with recycled polyethylene.

For example, the ratio in the region where Log MW is 5.0 or more, or 4.0 or less in the GPC curve graph and the molecular weight distribution (Mw/Mn, polydispersity index) may be measured using gel permeation chromatography (GPC, manufactured by Water). Specifically, they can be measured using a polystyrene calibration method using gel permeation chromatography (GPC, manufactured by Water).

Herein, the molecular weight distribution (Mw/Mn, PDI, polydispersity index) may be determined by measuring a weight average molecular weight (Mw) and a number average molecular weight (Mn) of the polyethylene, and then dividing the weight average molecular weight by the number average molecular weight.

Specifically, PL-GPC220 manufactured by Waters may be used as the gel permeation chromatography (GPC) instrument, and a Polymer Laboratories PLgel MIX-B 300 mm length column may be used. An evaluation temperature may be 160 °C, and 1,2,4-trichlorobenzene may be used for a solvent at a flow rate of 1 mL/min. Each polyethylene sample may be pretreated by dissolving in 1,2,4-trichlorobenzene containing 0.0125% of butylated hydroxytoluene (BHT) at 160 °C for 10 hours using a GPC analyzer (PL-GP220), and the sample with a concentration of 10 mg/10 mL may be supplied in an amount of 200 µL. Mw and Mn may be obtained using a calibration curve formed using a polystyrene standard. 9 kinds of the polystyrene standard are used with the molecular weight of 2000 g/mol, 10000 g/mol, 30000 g/mol, 70000 g/mol, 200000 g/mol, 700000 g/mol, 2000000 g/mol, 4000000 g/mol, and 10000000 g/mol.

Further, the polyethylene may have a weight average molecular weight of 300000 g/mol or more, or 300000 g/mol to 1000000 g/mol. Preferably, the weight average molecular weight of the polyethylene may be 320000 g/mol or more, 330000 g/mol or more, 340000 g/mol or more, 345000 g/mol or more, 348000 g/mol or more, 350000 g/mol or more, 354000 g/mol or more, 400000 g/mol or more, 450000 g/mol or more, 480000 g/mol or more, 500000 g/mol or more, 550000 g/mol or more, 600000 g/mol or more, 650000 g/mol or more, 700000 g/mol or more, 750000 g/mol or more, 800000 g/mol or more, 850000 g/mol or more, 900000 g/mol or more, or 1000000 g/mol or more. However, considering the compatibility with recycled polyethylene, the weight average molecular weight may be 1000000 g/mol or less, 950000 g/mol or less, 900000 g/mol or less, 880000 g/mol or less, 850000 g/mol or less, 800000 g/mol or less, 780000 g/mol or less, 750000 g/mol or less, 700000 g/mol or less, 680000 g/mol or less, 650000 g/mol or less, 600000 g/mol or less, 580000 g/mol or less, 550000 g/mol or less, 520000 g/mol or less, or 500000 g/mol or less.

When having the above-described weight average molecular weight (Mw), the molecular weight distribution of polyethylene can be optimized and mechanical properties such as environmental stress cracking resistance (ESCR) can be improved along with excellent compatibility with recycled polyethylene.

Meanwhile, as described above, the polyethylene of the present disclosure may have an optimized melt index while optimizing a high molecular region ratio in the molecular structure and a molecular weight distribution.

The polyethylene may have a melt index (MI_{2.16}, ASTM D 1238, 190 °C, 2.16kg) of 0.1 g/10min to 0.7 g/10min. Preferably, the polyethylene may have a melt index (MI_{2.16}, ASTM D 1238, 190 °C, 2.16kg) of 0.65 g/10min or less, 0.63 g/10min or less, 0.6 g/10min or less, 0.58 g/10min or less, 0.56 g/10min or less, 0.55 g/10min or less, 0.52 g/10min or less, or 0.5 g/10min or less, and 0.15 g/10min or more, 0.2 g/10min or more, 0.25 g/10min or more, 0.3 g/10min or more, 0.32 g/10min or more, 0.35 g/10min or more, 0.38 g/10min or more, 0.4 g/10min or more, 0.42 g/10min or more, or 0.45 g/10min or more. When having the above-described melt index (MI_{2.16}), the molecular weight distribution of polyethylene can be optimized and mechanical properties such as environmental stress cracking resistance (ESCR) can be improved along with excellent compatibility with recycled polyethylene.

When having the above-described melt index, the molecular weight of polyethylene can be optimized and mechanical properties such as environmental stress cracking resistance (ESCR) can be improved along with excellent compatibility with recycled polyethylene. In particular, considering compatibility with recycled polyethylene, it is preferable that the melt index (MI_{2.16}, ASTM D 1238, 190 °C, 2.16kg) of polyethylene is 0.1 g/10min or more.

Meanwhile, as described above, the polyethylene of the present disclosure may have an optimized melt flow rate ratio or density while optimizing a high molecular region ratio in the molecular structure, a molecular weight distribution and a weight average molecular weight or a melt index.

The polyethylene may preferably have a melt flow rate ratio (MFRR, MI_{21.6}/MI_{2.16}) of 40 to 80, preferably 42 or more, 43 or more, 45 or more, 48 or more, 50 or more, 52 or more, 55 or more, 58 or more, 60 or more, or 62 or more, and 78 or lower, 75 or lower, 73 or lower, 70 or lower, 68 or lower, or 65 or lower.

The MFRR is a value obtained by dividing the melt index (MI_{21.6}) measured at 190°C under a load of 21.6 kg by the melt index (MI_{2.16}) measured at 190°C under a load of 2.16 kg in accordance with ASTM D 1238.

When having the above-described melt flow rate ratio, the molecular weight distribution of polyethylene can be optimized and mechanical properties such as environmental stress cracking resistance (ESCR) can be improved along with excellent compatibility with recycled polyethylene.

Additionally, the polyethylene may be high density polyethylene (HDPE) satisfying a density (ASTM D1505, 23 °C) of 0.940 g/cm³ to 0.957 g/cm³.

More specifically, the density of the polyethylene may be 0.942 g/cm³ or more, 0.944 g/cm³ or more, or 0.945 g/cm³ or more, and 0.956 g/cm³ or less, or 0.955 g/cm³ or less.

When the density of the polyethylene satisfies the above-mentioned range, compatibility with recycled polyethylene can be improved, and degradation of major physical properties such as ESCR can be minimized without excessive use of virgin polyethylene resin when mixed with recycled polyethylene.

Meanwhile, the polyethylene according to one embodiment of the present disclosure may ensure excellent mechanical properties such as environmental stress cracking resistance (ESCR) or notched constant ligament stress (NCLS) along with excellent compatibility with recycled polyethylene by using a catalyst containing three or more specific metallocene compounds to optimize both the molecular weight distribution and the weight average molecular weight while strengthening a high molecular region ratio and maintaining a low molecular region ratio in the molecular structure.

Specifically, the polyethylene may have environmental stress cracking resistance (ESCR) measured according to ASTM D 1693 of 120 hours or more, or 120 hours to 310 hours.

More specifically, the polyethylene may have ESCR of 125 hours or more, 130 hours or more, 135 hours or more, 140 hours or more, 143 hours or more, 145 hours or more, 148 hours or more, 150 hours or more, 155 hours or more, 160 hours or more, 165 hours or more, 170 hours or more, 175 hours or more, or 180 hours or more, and 300 hours or less, 288 hours or less, 260 hours or less, 240 hours or less, 225 hours or less, 210 hours or less, 200 hours or less, 195 hours or less, 190 hours or less, or 185 hours or less.

Further, the polyethylene according to one embodiment of the present disclosure may have notched constant ligament stress (NCLS) measured according to ASTM F 2136 of 11.5 hours or more, or 11.5 hours to 20 hours.

More specifically, the polyethylene may have NCLS of 11.8 hours or more, 12 hours or more, 12.3 hours or more, 12.5 hours or more, 13 hours or more, 13.5 hours or more, 14 hours or more, 14.5 hours or more, or 15 hours or more, and 19.5 hours or less, 19 hours or less, 18.5 hours or less, 18 hours or less, 17.5 hours or less, 17 hours or less, 16.5 hours or less, or 16 hours or less.

Meanwhile, according to another embodiment of the present disclosure, there is provided a preparation method of the above-described polyethylene.

The preparation method of the polyethylene according to the present disclosure includes the step of polymerizing ethylene in the presence of a catalyst containing at least one first metallocene compound represented by the following Chemical Formula 1; at least one second metallocene compound represented by the following Chemical Formula 2; and at least one third metallocene compound represented by the following Chemical Formula 3: 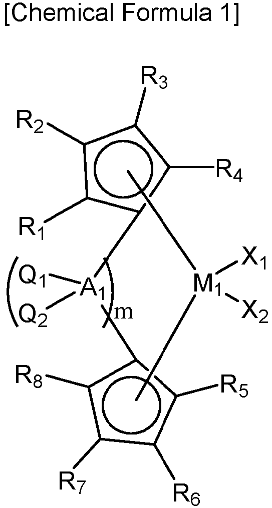 in Chemical Formula 1,
at least one of R₁ to R₈ is -(CH₂)ₙ-OR, wherein R is C₁₋₆ linear or branched alkyl, and n is an integer of 2 to 6,
the rest of R₁ to R₈ are the same as or different from each other, and are each independently a functional group selected from the group consisting of hydrogen, halogen, C₁₋₂₀ alkyl, C₂₋₂₀ alkenyl, C₆₋₂₀ aryl, C₇₋₄₀ alkylaryl, and C₇₋₄₀ arylalkyl, or two or more the rest of R₁ to R₈ adjacent to each other are connected with each other to form a C₆₋₂₀ aliphatic or aromatic ring unsubstituted or substituted with a C₁₋₁₀ hydrocarbyl group,
Q₁ and Q₂ are the same as or different from each other, and are each independently hydrogen, halogen, C₁₋₂₀ alkyl, C₂₋₂₀ alkenyl, C₂₋₂₀ alkoxyalkyl, C₆₋₂₀ aryl, C₇₋₄₀ alkylaryl, or C₇₋₄₀ arylalkyl;
A₁ is carbon (C), silicon (Si), or germanium (Ge);
M₁ is a Group 4 transition metal;
X₁ and X₂ are the same as or different from each other, and are each independently halogen, C₁₋₂₀ alkyl, C₂₋₂₀ alkenyl, C₆₋₂₀ aryl, a nitro group, an amido group, C₁₋₂₀ alkylsilyl, C₁₋₂₀ alkoxy, or a C₁₋₂₀ sulfonate group; and
m is 0 or 1, 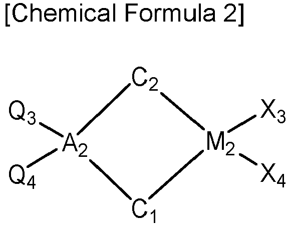 in Chemical Formula 2,
   Q₃ and Q₄ are the same as or different from each other, and are each independently hydrogen, halogen, C₁₋₂₀ alkyl, C₂₋₂₀ alkenyl, C₂₋₂₀ alkoxyalkyl, C₆₋₂₀ aryl, C₇₋₄₀ alkylaryl, or C₇₋₄₀ arylalkyl;
   A₂ is carbon (C), silicon (Si), or germanium (Ge);
   M₂ is a Group 4 transition metal;
   X₃ and X₄ are the same as or different from each other, and are each independently halogen, C₁₋₂₀ alkyl, C₂₋₂₀ alkenyl, C₆₋₂₀ aryl, a nitro group, an amido group, C₁₋₂₀ alkylsilyl, C₁₋₂₀ alkoxy, or a C₁₋₂₀ sulfonate group; and
   any one of C₁ and C₂ is represented by the following Chemical Formula 2a or 2b, and the other of C₁ and C₂ is represented by the following Chemical Formula 2c, 2d, or 2e, 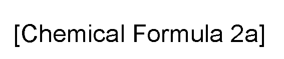 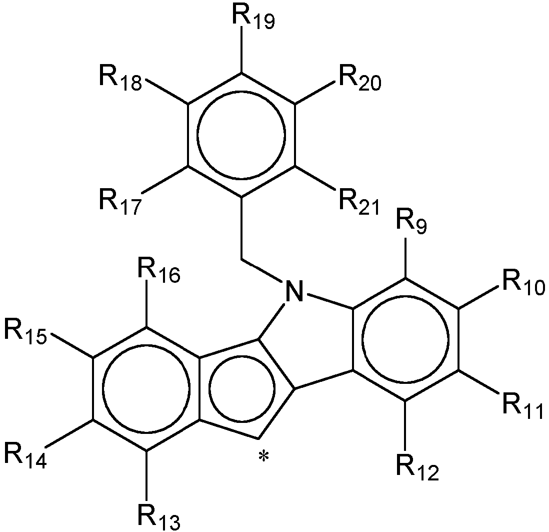 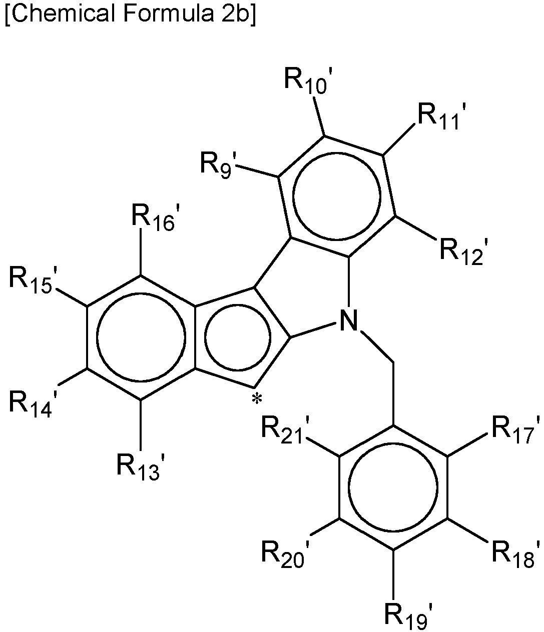 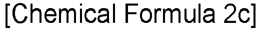 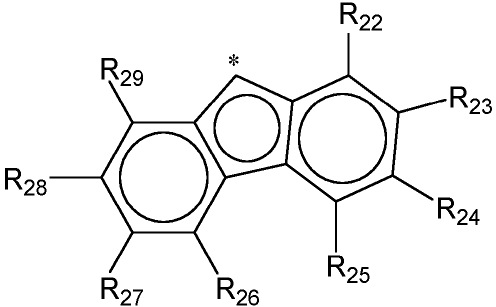 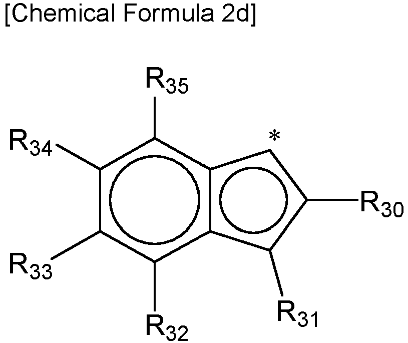 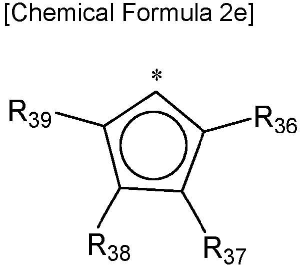
   in Chemical Formulae 2a, 2b, 2c, 2d and 2e, R₉ to R₃₉ and R₉' to R₂₁' are the same as or different from each other, and are each independently hydrogen, halogen, C₁₋₂₀ alkyl, C₁₋₂₀ haloalkyl, C₂₋₂₀ alkenyl, C₁₋₂₀ alkylsilyl, C₁₋₂₀ alkylsilylalkylene, C₁₋₂₀ alkoxysilyl, C₁₋₂₀ alkoxy, C₆₋₂₀ aryl, C₇₋₄₀ alkylaryl, or C₇₋₄₀ arylalkyl, provided that at least one of R₁₇ to R₂₁ and R₁₇' to R₂₁' is C₁₋₂₀ haloalkyl,
   two or more R₂₂ to R₃₉ adjacent to each other may be connected with each other to form a C₆₋₂₀ aliphatic or aromatic ring unsubstituted or substituted with a C₁₋₁₀ hydrocarbyl group; and
   * represents a site of binding to A₂ and M₂, 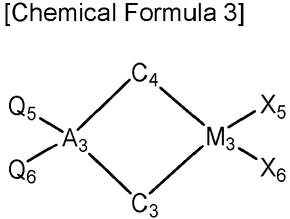 in Chemical Formula 3,
      Q₅ and Q₆ are the same as or different from each other, and are each independently hydrogen, halogen, C₁₋₂₀ alkyl, C₂₋₂₀ alkenyl, C₂₋₂₀ alkoxyalkyl, C₆₋₂₀ aryl, C₇₋₄₀ alkylaryl, or C₇₋₄₀ arylalkyl;
      A₃ is carbon (C), silicon (Si), or germanium (Ge);
      M₃ is a Group 4 transition metal;
      X₅ and X₆ are the same as or different from each other, and are each independently halogen, C₁₋₂₀ alkyl, C₂₋₂₀ alkenyl, C₆₋₂₀ aryl, a nitro group, an amido group, C₁₋₂₀ alkylsilyl, C₁₋₂₀ alkoxy, or a C₁₋₂₀ sulfonate group; and
      any one of C₃ and C₄ is represented by Chemical Formula 3a, 3b, or 3c, provided that at least one of C₃ and C₄ is not represented by Chemical Formula 3c, 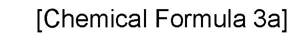 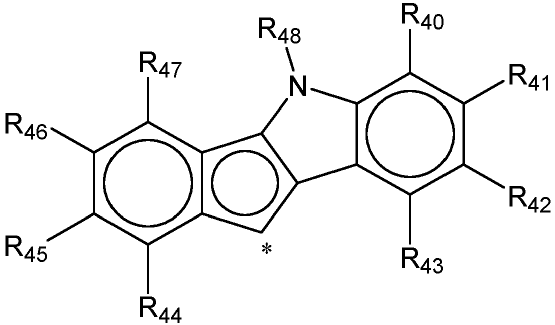 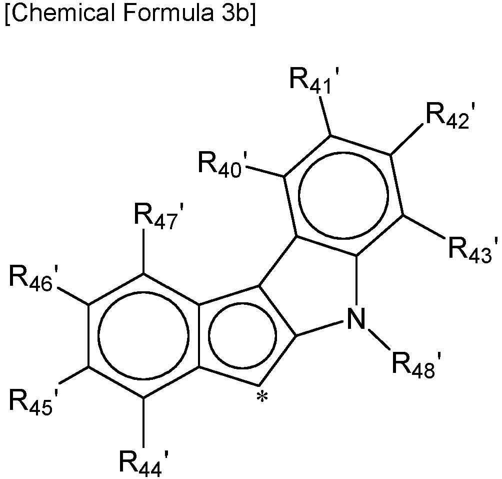 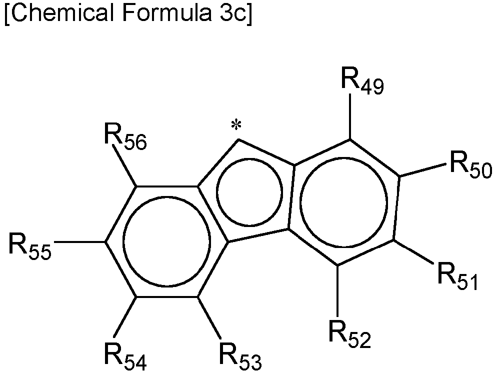
      in Chemical Formulae 3a and 3b, R₄₀ to R₄₇ and R₄₀' to R₄₇' are the same as or different from each other, and are each independently hydrogen, halogen, C₁₋₂₀ alkyl, C₁₋₂₀ haloalkyl, C₂₋₂₀ alkenyl, C₁₋₂₀ alkylsilyl, C₁₋₂₀ alkylsilylalkylene, C₁₋₂₀ alkoxysilyl, C₁₋₂₀ alkoxy, C₆₋₂₀ aryl, C₇₋₄₀ alkylaryl, or C₇₋₄₀ arylalkyl, and
      R₄₈ and R₄₈' are the same as or different from each other, and are each independently C₁₋₂₀ alkyl, C₁₋₂₀ alkylsilyl, C₁₋₂₀ alkylsilylalkylene, C₁₋₂₀ alkoxysilyl, or C₁₋₂₀ alkoxy;
      in Chemical Formula 3c, R₄₉ to R₅₆ are the same as or different from each other, and are each independently hydrogen, halogen, C₁₋₂₀ alkyl, C₁₋₂₀ haloalkyl, C₂₋₂₀ alkenyl, C₁₋₂₀ alkylsilyl, C₁₋₂₀ alkylsilylalkylene, C₁₋₂₀ alkoxysilyl, C₁₋₂₀ alkoxy, C₆₋₂₀ aryl, C₇₋₄₀ alkylaryl, or C₇₋₄₀ arylalkyl, or two or more R₄₉ to R₅₆ adjacent to each other may be connected with each other to form a substituted or unsubstituted aliphatic ring, or a substituted or unsubstituted aromatic ring; and
      * represents a site of binding to A₃ and M₃.

Unless otherwise specified herein, following terms may be defined as follows.

The halogen may be fluorine (F), chlorine (Cl), bromine (Br) or iodine (I).

The hydrocarbyl group is a monovalent functional group in a hydrogen-removed form from a hydrocarbon, and may include an alkyl group, an alkenyl group, an alkynyl group, an aryl group, an aralkyl group, an aralkenyl group, an aralkynyl group, an alkylaryl group, an alkenylaryl group, an alkynylaryl group, and the like. The C₁₋₃₀ hydrocarbyl group may be a C₁₋₂₀ or C₁₋₁₀ hydrocarbyl group. For example, the hydrocarbyl group may be a linear, branched or cyclic alkyl. More specifically, the C₁₋₃₀ hydrocarbyl group may be a linear, branched or cyclic alkyl group such as a methyl group, an ethyl group, an n-propyl group, an iso-propyl group, an n-butyl group, an iso-butyl group, a tert-butyl group, an n-pentyl group, an n- hexyl group, an n-heptyl group and a cyclohexyl group; or an aryl group such as phenyl, biphenyl, naphthyl, anthracenyl, phenanthrenyl, or fluorenyl. Moreover, it may be alkylaryl such as methylphenyl, ethylphenyl, methylbiphenyl, and methylnaphthyl, or arylalkyl such as phenylmethyl, phenylethyl, biphenylmethyl, and naphthylmethyl. It may also be alkenyl such as allyl, ethenyl, propenyl, butenyl, and pentenyl.

The C₁₋₂₀ alkyl may be linear, branched or cyclic alkyl. Specifically, the C₁₋₂₀ alkyl may be C₁₋₂₀ linear alkyl; C₁₋₁₅ linear alkyl; C₁₋₅ linear alkyl; C₃₋₂₀ branched or cyclic alkyl; C₃₋₁₅ branched or cyclic alkyl; or C₃₋₁₀ branched or cyclic alkyl. More specifically, the C₁₋₂₀ alkyl may be methyl, ethyl, propyl, isopropyl, n-butyl, tert-butyl, pentyl, hexyl, heptyl, octyl, cyclopropyl, cyclobutyl, cyclopentyl, cyclohexyl, cycloheptyl, cyclooctyl, or the like, but is not limited thereto.

The C₂₋₂₀ alkenyl may be linear, or branched alkenyl. Specifically, it may be allyl, ethenyl, propenyl, butenyl, pentenyl, or the like, but is not limited thereto.

The C₁₋₂₀ alkoxy may be methoxy, ethoxy, isopropoxy, n-butoxy, tert-butoxy, cyclohexyloxy, or the like, but is not limited thereto.

The C₂₋₂₀ alkoxyalkyl group is a functional group in which at least one hydrogen of the above-mentioned alkyl is substituted with alkoxy, and it may be alkoxyalkyl such as methoxymethyl, methoxyethyl, ethoxymethyl, iso-propoxymethyl, iso-propoxyethyl, iso-propoxypropyl, iso-propoxyhexyl, tert-butoxymethyl, tert-butoxyethyl, tert-butoxypropyl, and tert-butoxyhexyl, but is not limited thereto.

The C₆₋₄₀ aryloxy may be phenoxy, biphenoxy, naphthoxy, or the like, but is not limited thereto.

The C₇₋₄₀ aryloxyalkyl is a functional group in which one or more hydrogens of the above-mentioned alkyl are substituted with aryloxy, and it may be phenoxymethyl, phenoxyethyl, phenoxyhexyl, or the like, but is not limited thereto.

The C₁₋₂₀ alkylsilyl or the C₁₋₂₀ alkoxysilyl is a functional group in which 1 to 3 hydrogens of -SiH₃ are substituted with 1 to 3 alkyl groups or alkoxy groups described above, and it may be alkylsilyl such as methylsilyl, dimethylsilyl, trimethylsilyl, dimethylethylsilyl, diethylmethylsilyl or dimethylpropylsilyl; alkoxysilyl such as methoxysilyl, dimethoxysilyl, trimethoxysilyl or dimethoxyethoxysilyl; or alkoxyalkylsilyl such as methoxydimethylsilyl, diethoxymethylsilyl or dimethoxypropylsilyl; or the like, but is not limited thereto.

The C₁₋₂₀ silylalkyl is a functional group in which at least one hydrogen of the above-mentioned alkyl is substituted with silyl, and it may be -CH₂-SiH₃, methylsilylmethyl or dimethylethoxysilylpropyl, or the like, but is not limited thereto.

In addition, the C₁₋₂₀ alkylene is the same as the above-mentioned alkyl except that it is a divalent substituent, and it may be methylene, ethylene, propylene, butylene, pentylene, hexylene, heptylene, octylene, cyclopropylene, cyclobutylene, cyclopentylene, cyclohexylene, cycloheptylene, cyclooctylene, or the like, but is not limited thereto.

The C₆₋₂₀ aryl may be a monocyclic, bicyclic or tricyclic aromatic hydrocarbon. For example, the C₆₋₂₀ aryl may be phenyl, biphenyl, naphthyl, anthracenyl, phenanthrenyl, fluorenyl, or the like, but is not limited thereto.

The C₇₋₂₀ alkylaryl may refer to a substituent in which at least one hydrogen of the aromatic ring is substituted with the above-mentioned alkyl. For example, the C₇₋₂₀ alkylaryl may be methylphenyl, ethylphenyl, methylbiphenyl, methylnaphthyl, or the like, but is not limited thereto.

The C₇₋₂₀ arylalkyl may refer to a substituent in which at least one hydrogen of the alkyl is substituted with the above-mentioned aryl. For example, the C₇₋₂₀ arylalkyl may be phenylmethyl, phenylethyl, biphenylmethyl, naphthylmethyl, or the like, but is not limited thereto.

In addition, the C₆₋₂₀ arylene is the same as the above-mentioned aryl except that it is a divalent substituent, and it may be phenylene, biphenylene, naphthylene, anthracenylene, phenanthrenylene, fluorenylene, or the like, but is not limited thereto.

The Group 4 transition metal may be titanium (Ti), zirconium (Zr), hafnium (Hf), or rutherfordium (Rf), and may specifically be titanium (Ti), zirconium (Zr), or hafnium (Hf). More specifically, it may be zirconium (Zr), or hafnium (Hf), but the present disclosure is not limited thereto.

Further, the Group 13 element may be boron (B), aluminum (Al), gallium (Ga), indium (In), or thallium (TI), and may specifically be boron (B) or aluminum (Al), but the present disclosure is not limited thereto.

Meanwhile, the first metallocene compound may be represented by any one of the following Chemical Formulae 1-1 to 1-4.

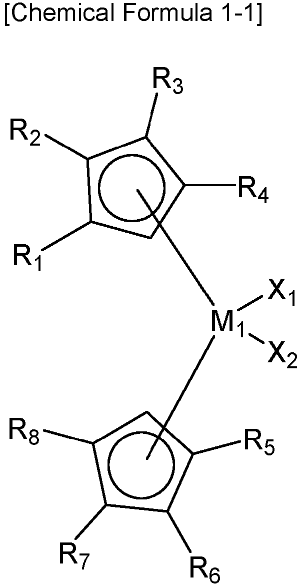

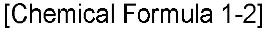

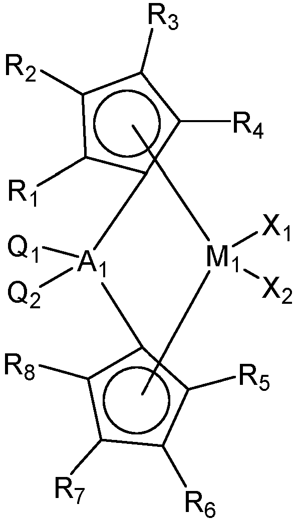

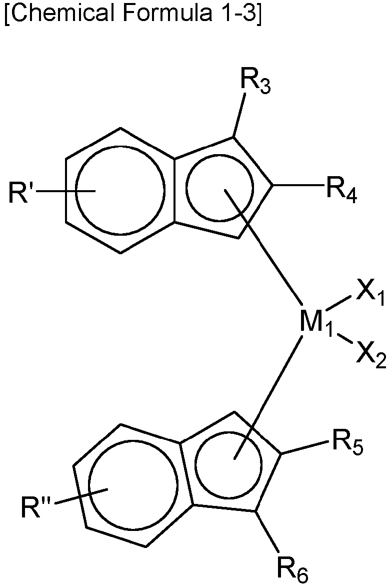

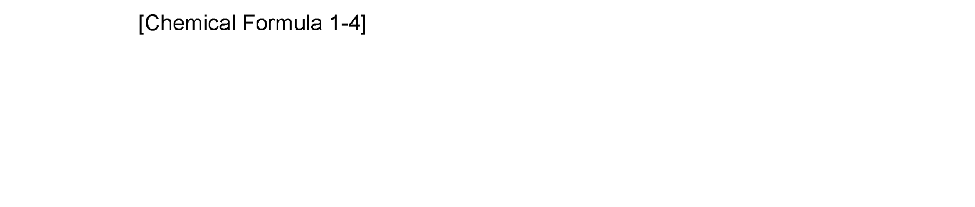

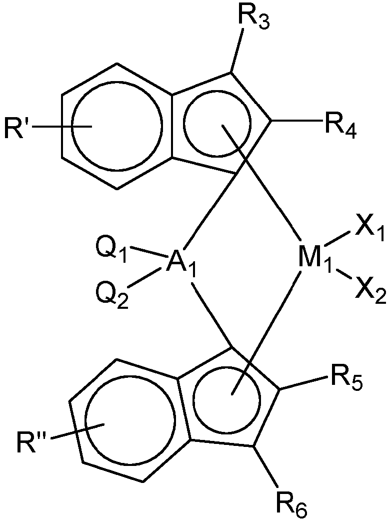

In Chemical Formulae 1-1 to 1-4, Q₁, Q₂, A₁, M₁, X₁, X₂, and R₁ to R₈ are as defined in the Chemical Formula 1. R' and R" are the same as or different from each other, and are each independently hydrogen or a C₁₋₁₀ hydrocarbyl group.

Preferably, the first metallocene compound has a structure including a bis-cyclopentadienyl ligand, and more preferably, the cyclopentadienyl ligands may be structured symmetrically around a transition metal. More preferably, the first metallocene compound may be represented by Chemical Formula 1-1.

In Chemical Formula 1 and Chemical Formulae 1-1 to 1-4, at least one of R₁ to R₈ is -(CH₂)ₙ-OR, wherein R is C₁₋₆ linear or branched alkyl, and n is an integer of 2 to 6. Specifically, R is C₁₋₄ linear or branched alkyl, and n is an integer of 4 to 6. For example, at least one of R₁ to R₈ may be C₂₋₆ alkyl substituted with C₁₋₆ alkoxy, or C₄₋₆ alkyl substituted with C₁₋₄ alkoxy.

In Chemical Formula 1 and Chemical Formulae 1-1 to 1-4, the rest of R₁ to R₈ are the same as or different from each other, and are each independently a functional group selected from the group consisting of hydrogen, halogen, C₁₋₂₀ alkyl, C₂₋₂₀ alkenyl, C₆₋₂₀ aryl, C₇₋₄₀ alkylaryl, and C₇₋₄₀ arylalkyl, or two or more the rest of R₁ to R₈ adjacent to each other may be connected with each other to form a C₆₋₂₀ aliphatic or aromatic ring unsubstituted or substituted with a C₁₋₁₀ hydrocarbyl group.

Specifically, the rest of R₁ to R₈ are the same as or different from each other, and may each independently be hydrogen, C₁₋₂₀ alkyl, C₁₋₁₀ alkyl, C₁₋₆ alkyl, C₂₋₆ alkyl substituted with C₁₋₆ alkoxy, or C₄₋₆ alkyl substituted with C₁₋₄ alkoxy. Alternatively, two or more the rest of R₁ to R₈ adjacent to each other may be connected with each other to form a C₆₋₂₀ aliphatic or aromatic ring substituted with a C₁₋₃ hydrocarbyl group.

Preferably, in Chemical Formula 1 and Chemical Formulae 1-1 to 1-4, each of R₃ and R₆ is C₁₋₆ alkyl, or C₂₋₆ alkyl substituted with C₁₋₆ alkoxy, provided that at least one of R₃ and R₆ is C₂₋₆ alkyl substituted with C₁₋₆ alkoxy. Alternatively, each of R₃ and R₆ is C₄₋₆ alkyl, or C₄₋₆ alkyl substituted with C₁₋₄ alkoxy, provided that at least one of R₃ and R₆ is C₄₋₆ alkyl substituted with C₁₋₄ alkoxy. For example, each of R₃ and R₆ may be n-butyl, n-pentyl, n-hexyl, tert-butoxy butyl, or tert-butoxy hexyl, provided that at least one of R₃ and R₆ is tert-butoxy butyl, or tert-butoxy hexyl. Preferably, R₃ and R₆ are the same as each other, and may be tert-butoxy butyl or tert-butoxy hexyl.

In addition, in Chemical Formula 1 and Chemical Formulae 1-1 to 1-4, R₁, R₂, R₄, R₅, R₇, and R₈ may be hydrogen.

In Chemical Formula 1, 1-2 and 1-4, Q₁ and Q₂ are the same as or different from each other, and are each independently hydrogen, halogen, C₁₋₂₀ alkyl, C₂₋₂₀ alkenyl, C₂₋₂₀ alkoxyalkyl, C₆₋₂₀ aryl, C₇₋₄₀ alkylaryl, or C₇₋₄₀ arylalkyl.

Specifically, each of Q₁ and Q₂ may be C₁₋₁₂ alkyl, C₁₋₆ alkyl, or C₁₋₃ alkyl. Preferably, Q₁ and Q₂ are the same as each other, and may be C₁₋₃ alkyl. More preferably, Q₁ and Q₂ may be methyl.

In Chemical Formula 1 and Chemical Formulae 1-1 to 1-4, A₁ is carbon (C), silicon (Si), or germanium (Ge). Specifically, A₁ may be silicon (Si).

In Chemical Formula 1 and Chemical Formulae 1-1 to 1-4, M₁ is a Group 4 transition metal. Specifically, M₁ may be zirconium (Zr) or hafnium (Hf), and preferably zirconium (Zr).

In Chemical Formula 1 and Chemical Formulae 1-1 to 1-4, X₁ and X₂ are the same as or different from each other, and are each independently halogen, C₁₋₂₀ alkyl, C₂₋₂₀ alkenyl, C₆₋₂₀ aryl, a nitro group, an amido group, C₁₋₂₀ alkylsilyl, C₁₋₂₀ alkoxy, or a C₁₋₂₀ sulfonate group. Specifically, each of X₁ and X₂ may be halogen, and each may be chloro, iodine, or bromine. Preferably, X₁ and X₂ may be chloro.

In Chemical Formula 1, m is 0 or 1, and preferably 0.

The compound represented by the Chemical Formula 1 may be, for example, a compound represented by one of the following structural formulae, but is not limited thereto.

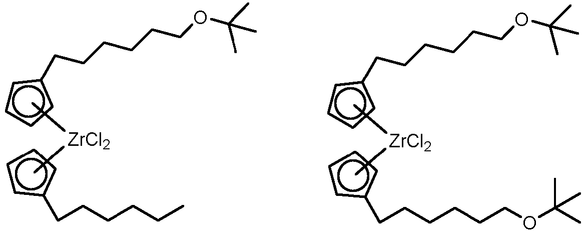

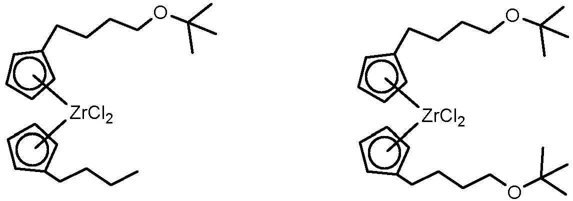

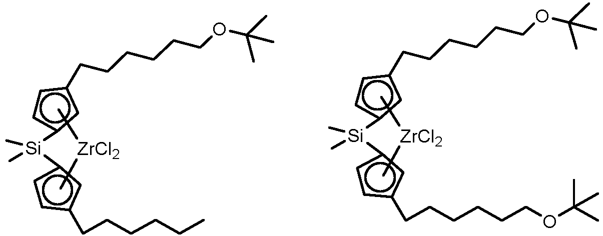

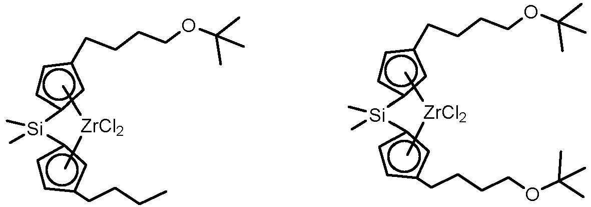

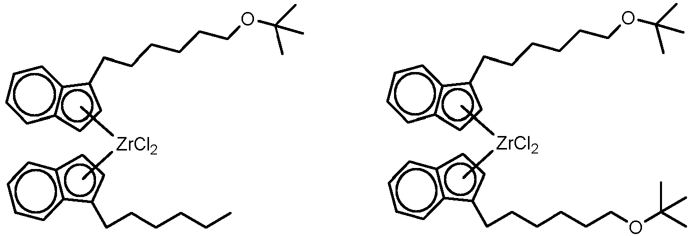

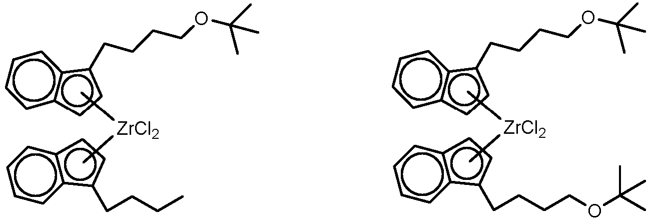

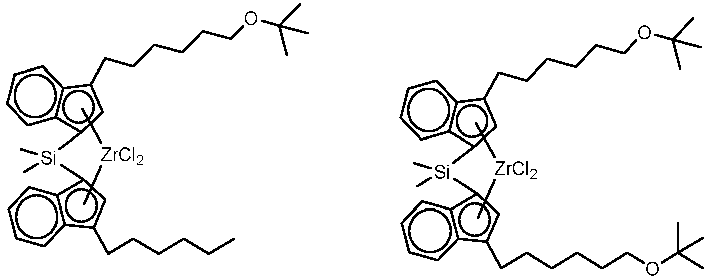

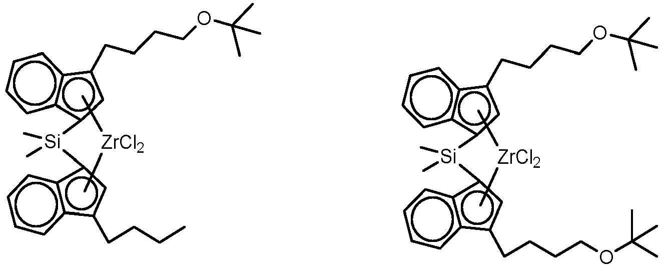

Preferably, the first metallocene compound may be a compound represented by one of the following structural formulae.

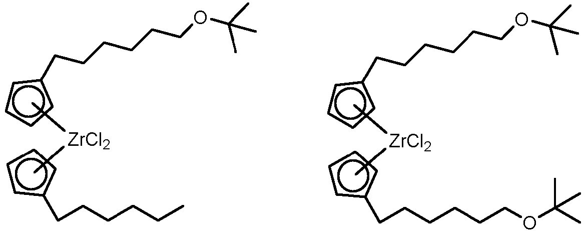

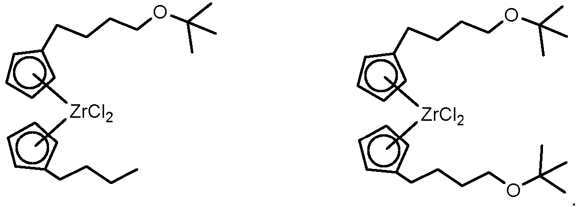

More preferably, the first metallocene compound may be a compound represented by one of the following structural formulae.

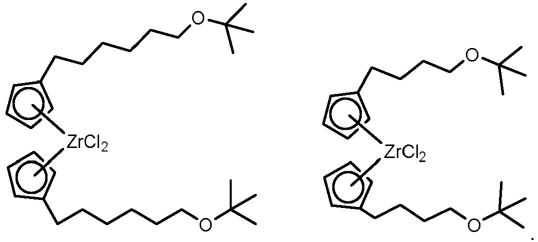

The first metallocene compound represented by the above structural formulae may be synthesized by applying known reactions, and a more detailed synthesis method may be understood with reference to Examples.

As the preparation method according to the present disclosure uses one or more first metallocene compounds represented by one of Chemical Formula 1 or Chemical Formulae 1-1, 1-2, 1-3, and 1-4 with one or more second metallocene compounds and one or more third metallocene compounds to be described later, both the molecular weight distribution and the weight average molecular weight are optimized while strengthening a high molecular region ratio and maintaining a low molecular region ratio in the molecular structure, and thus mechanical properties such as environmental stress cracking resistance (ESCR) can be effectively improved along with excellent compatibility with recycled polyethylene.

Meanwhile, the second metallocene compound may be represented by the following Chemical Formula 2-1.

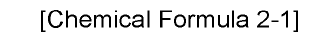

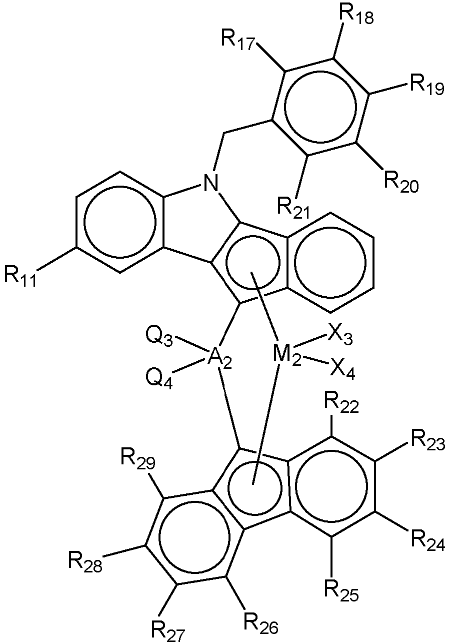

In Chemical Formula 2-1, Q₃, Q₄, A₂, M₂, X₃, X₄, R₁₁, R₁₇ to R₂₁, and R₂₂ to R₂₉ are as defined in the Chemical Formula 2.

In Chemical Formula 2 and 2-1, Q₃ and Q₄ are the same as or different from each other, and are each independently hydrogen, halogen, C₁₋₂₀ alkyl, C₂₋₂₀ alkenyl, C₂₋₂₀ alkoxyalkyl, C₆₋₂₀ aryl, C₇₋₄₀ alkylaryl, or C₇₋₄₀ arylalkyl. Specifically, each of Q₃ and Q₄ may be C₁₋₁₂ alkyl, C₁₋₈ alkyl, C₁₋₃ alkyl, C₂₋₁₈ alkoxyalkyl, C₂₋₁₄ alkoxyalkyl, or C₂₋₁₂ alkoxyalkyl. More specifically, each of Q₃ and Q₄ may be C₁₋₃ alkyl, or C₂₋₁₂ alkoxyalkyl. Preferably, Q₃ and Q₄ are different from each other, and one of Q₃ and Q₄ may be C₁₋₃ alkyl and the other may be C₂₋₁₂ alkoxyalkyl. More preferably, one of Q₃ and Q₄ may be methyl and the other may be tert-butoxyhexyl.

In Chemical Formula 2 and Chemical Formula 2-1, A₂ is carbon (C), silicon (Si), or germanium (Ge). Specifically, A₂ may be silicon (Si).

In Chemical Formula 2 and Chemical Formula 2-1, M₂ is a Group 4 transition metal. Specifically, M₂ may be zirconium (Zr) or hafnium (Hf), and preferably zirconium (Zr).

In Chemical Formula 2 and Chemical Formula 2-1, X₃ and X₄ are the same as or different from each other, and are each independently halogen, C₁₋₂₀ alkyl, C₂₋₂₀ alkenyl, C₆₋₂₀ aryl, a nitro group, an amido group, C₁₋₂₀ alkylsilyl, C₁₋₂₀ alkoxy, or a C₁₋₂₀ sulfonate group. Specifically, each of X₃ and X₄ may be halogen, and each may be chloro, iodine, or bromine. Preferably, X₃ and X₄ may be chloro.

In Chemical Formula 2, one of C₁ and C₂ is represented by the Chemical Formula 2a or 2b, and the other of C₁ and C₂ is represented by the Chemical Formula 2c, 2d, or 2e, and preferably 2c.

In Chemical Formulae 2 and 2-1, R₉ to R₂₁ and R_{9'} to R_{21'} are the same as or different from each other, and are each independently hydrogen, halogen, C₁₋₂₀ alkyl, C₁₋₂₀ haloalkyl, C₂₋₂₀ alkenyl, C₁₋₂₀ alkylsilyl, C₁₋₂₀ alkylsilylalkylene, C₁₋₂₀ alkoxysilyl, C₁₋₂₀ alkoxy, C₆₋₂₀ aryl, C₇₋₄₀ alkylaryl, or C₇₋₄₀ arylalkyl, provided that at least one of R₁₇ to R₂₁ and R₁₇' to R₂₁' is C₁₋₂₀ haloalkyl.

Specifically, in Chemical Formula 2, R₉ to R₁₀, R₁₂ to R₁₆, R_{9'} to R_{10'} and R_{12'} to R₁₆ may be hydrogen.

Specifically, in Chemical Formulae 2 and 2-1, each of R₁₁ and R_{11'} may be C₁₋₆ linear or branched alkyl, or C₁₋₃ linear or branched alkyl. Preferably, each may be methyl.

Specifically, in Chemical Formulae 2 and 2-1, each of R₁₇ to R₂₁ and R₁₇ to R_{21'} may be hydrogen or C₁₋₆ haloalkyl, provided that at least one of R₁₇ to R₂₁ and R₁₇ to R_{21'} is C₁₋₆ haloalkyl. Alternatively, each of R₁₇ to R₂₁ and R_{17'} to R_{21'} may be hydrogen or C₁₋₃ haloalkyl, provided that at least one of R₁₇ to R₂₁ and R_{17'} to R₂₁' is C₁₋₃ haloalkyl. For example, R₁₇ to R₂₀ and R_{17'} to R_{20'} are hydrogen, and R₂₁ or R_{21'} is trihalomethyl, preferably trifluoromethyl.

In Chemical Formulae 2 and 2-1, R₂₂ to R₃₉ are the same as or different from each other, and may each independently be hydrogen, halogen, C₁₋₂₀ alkyl, C₁₋₂₀ haloalkyl, C₂₋₂₀ alkenyl, C₁₋₂₀ alkylsilyl, C₁₋₂₀ alkylsilylalkylene, C₁₋₂₀ alkoxysilyl, C₁₋₂₀ alkoxy, C₆₋₂₀ aryl, C₇₋₄₀ alkylaryl, or C₇₋₄₀ arylalkyl, or two or more R₂₂ to R₃₉ adjacent to each other may be connected with each other to form a C₆₋₂₀ aliphatic or aromatic ring unsubstituted or substituted with a C₁₋₁₀ hydrocarbyl group.

Specifically, each of R₂₂ to R₂₉ may be hydrogen, C₁₋₂₀ alkyl, C₁₋₁₀ alkyl, C₁₋₆ alkyl, or C₁₋₃ alkyl. Alternatively, two or more R₂₂ to R₂₉ adjacent to each other may be connected with each other to form a C₆₋₂₀ aliphatic or aromatic ring substituted with a C₁₋₃ hydrocarbyl group. Preferably, R₂₂ to R₂₉ may be hydrogen.

In Chemical Formulae 2 and 2-1, each of R₃₀ to R₃₅ may be hydrogen, C₁₋₂₀ alkyl, C₁₋₁₀ alkyl, C₁₋₆ alkyl, or C₁₋₃ alkyl.

In Chemical Formulae 2 and 2-1, each of R₂₆ to R₂₉ may be hydrogen, C₁₋₂₀ alkyl, C₁₋₁₀ alkyl, C₁₋₆ alkyl, or C₁₋₃ alkyl.

The compound represented by the Chemical Formula 2 may be, for example, a compound represented by the following structural formula, but is not limited thereto.

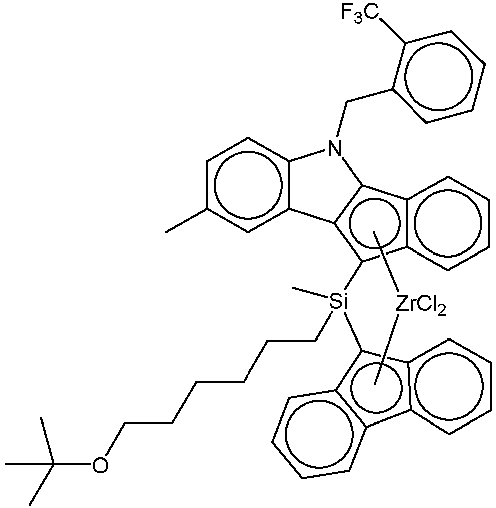

The second metallocene compound represented by the above structural formula may be synthesized by applying known reactions, and a more detailed synthesis method may be understood with reference to Examples.

As the preparation method according to the present disclosure uses one or more first metallocene compounds represented by one of Chemical Formula 1 or Chemical Formulae 1-1, 1-2, 1-3, and 1-4 and one or more second metallocene compounds represented by one of Chemical Formula 2 or Chemical Formulae 2-1 with one or more third metallocene compounds to be described later, both the molecular weight distribution and the weight average molecular weight are optimized while strengthening a high molecular region ratio and maintaining a low molecular region ratio in the molecular structure, and thus mechanical properties such as environmental stress cracking resistance (ESCR) can be effectively improved along with excellent compatibility with recycled polyethylene.

Meanwhile, the third metallocene compound may be represented by the following Chemical Formula 3-1.

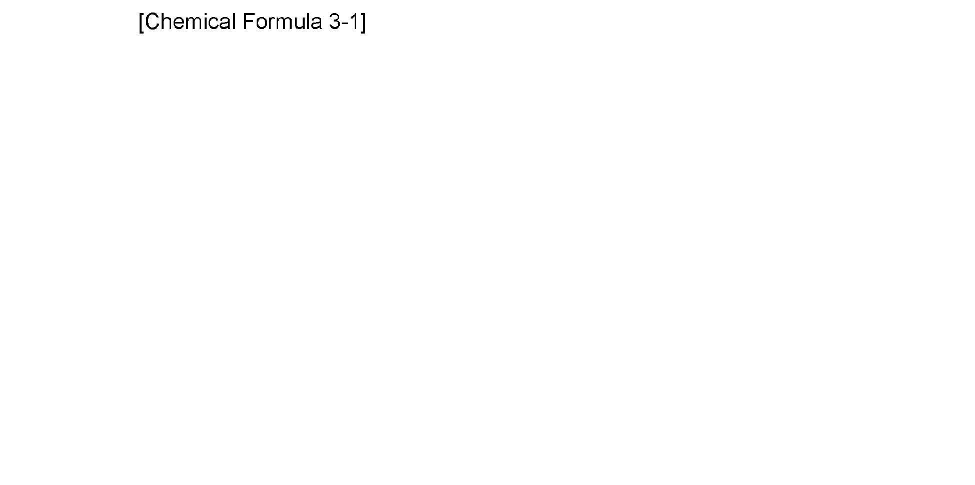

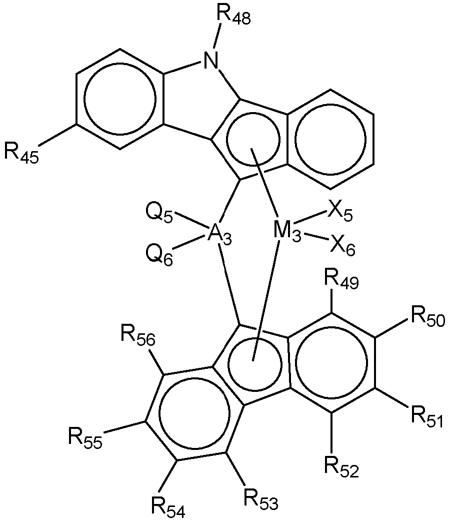

In Chemical Formula 3-1, Q₅, Q₆, A₃, M₃, X₅, X₆, R₄₅, R₄₈, and R₄₉ to R₅₆ are as defined in the Chemical Formula 3.

In Chemical Formulae 3 and 3-1, Q₅ and Q₆ are the same as or different from each other, and are each independently hydrogen, halogen, C₁₋₂₀ alkyl, C₂₋₂₀ alkenyl, C₂₋₂₀ alkoxyalkyl, C₆₋₂₀ aryl, C₇₋₄₀ alkylaryl, or C₇₋₄₀ arylalkyl. Specifically, each of Q₅ and Q₆ may be C₁₋₁₂ alkyl, C₁₋₈ alkyl, C₁₋₃ alkyl, C₂₋₁₈ alkoxyalkyl, C₂₋₁₄ alkoxyalkyl, or C₂₋₁₂ alkoxyalkyl. More specifically, each of Q₅ and Q₆ may be C₁₋₃ alkyl, or C₂₋₁₂ alkoxyalkyl. Preferably, Q₅ and Q₆ are different from each other, and one of Q₅ and Q₆ may be C₁₋₃ alkyl and the other may be C₂₋₁₂ alkoxyalkyl. More preferably, one of Q₅ and Q₆ may be methyl and the other may be tert-butoxyhexyl.

In Chemical Formulae 3 and 3-1, A₃ is carbon (C), silicon (Si), or germanium (Ge). Specifically, A₃ may be silicon (Si).

In Chemical Formulae 3 and 3-1, M₃ is a Group 4 transition metal. Specifically, M₃ may be zirconium (Zr) or hafnium (Hf), and preferably zirconium (Zr).

In Chemical Formulae 3 and 3-1, X₅ and X₆ are the same as or different from each other, and are each independently halogen, C₁₋₂₀ alkyl, C₂₋₂₀ alkenyl, C₆₋₂₀ aryl, a nitro group, an amido group, C₁₋₂₀ alkylsilyl, C₁₋₂₀ alkoxy, or a C₁₋₂₀ sulfonate group. Specifically, each of X₅ and X₆ may be halogen, and each may be chloro, iodine, or bromine. Preferably, X₅ and X₆ may be chloro.

In Chemical Formula 3, one of C₁ and C₂ is represented by the Chemical Formula 3a or 3b, and the other of C₁ and C₂ may be represented by the Chemical Formula 3c.

In Chemical Formulae 3 and 3-1, R₄₀ to R₄₇ and R₄₀' to R₄₇' are the same as or different from each other, and are each independently hydrogen, halogen, C₁₋₂₀ alkyl, C₁₋₂₀ haloalkyl, C₂₋₂₀ alkenyl, C₁₋₂₀ alkylsilyl, C₁₋₂₀ alkylsilylalkylene, C₁₋₂₀ alkoxysilyl, C₁₋₂₀ alkoxy, C₆₋₂₀ aryl, C₇₋₄₀ alkylaryl, or C₇₋₄₀ arylalkyl.

In addition, R₄₈ and R₄₈' are the same as or different from each other, and are each independently C₁₋₂₀ alkyl, C₁₋₂₀ alkylsilyl, C₁₋₂₀ alkylsilylalkylene, C₁₋₂₀ alkoxysilyl, or C₁₋₂₀ alkoxy.

Specifically, in Chemical Formula 3, R₄₀ to R₄₄, R₄₆ to R₄₇, R₄₀' to R_{44'}, and R_{46'} to R₄₇' may be hydrogen.

Specifically, in Chemical Formulae 3 and 3-1, each of R₄₅ and R_{45'} may be hydrogen, halogen, C₁₋₆ alkyl, or C₁₋₆ alkoxy, or each may be hydrogen, halogen, C₁₋₃ alkyl, or C₁₋₃alkoxy. For example, each of R₄₅ and R_{45'} may be hydrogen, bromine, methyl, or methoxy, and preferably methyl.

Further, in Chemical Formulae 3 and 3-1, each of R₄₈ and R₄₈' may be C₁₋₆ alkyl, C₁₋₆ alkylsilyl, C₁₋₆ alkylsilylalkylene, or C₆₋₁₂ aryl. More specifically, each may be C₁₋₆ linear or branched alkyl, C₁₋₆ linear or branched alkylsilyl, C₁₋₆ linear or branched alkylsilylalkylene, or C₆₋₁₂ aryl. For example, each of R₄₈ and R₄₈' may be methyl, trimethylsilyl, trimethylsilylmethylene, or phenyl, and preferably methyl.

In Chemical Formulae 3 and 3-1, R₄₉ to R₅₆ are the same as or different from each other, and are each independently hydrogen, halogen, C₁₋₂₀ alkyl, C₁₋₂₀ haloalkyl, C₂₋₂₀ alkenyl, C₁₋₂₀ alkylsilyl, C₁₋₂₀ alkylsilylalkylene, C₁₋₂₀ alkoxysilyl, C₁₋₂₀ alkoxy, C₆₋₂₀ aryl, C₇₋₄₀ alkylaryl, or C₇₋₄₀ arylalkyl, or two or more R₄₉ to R₅₆ adjacent to each other may be connected with each other to form a C₆₋₂₀ aliphatic or aromatic ring unsubstituted or substituted with a C₁₋₁₀ hydrocarbyl group.

Specifically, each of R₄₉ to R₅₆ may be hydrogen, C₁₋₂₀ alkyl, C₁₋₁₀ alkyl, C₁₋₆ alkyl, or C₁₋₃ alkyl. Alternatively, two or more R₄₉ to R₅₆ adjacent to each other may be connected with each other to form a C₆₋₂₀ aliphatic or aromatic ring substituted with a C₁₋₃ hydrocarbyl group. For example, R₄₉ to R₅₆ may be hydrogen, tert-butyl, or n-hexyl, or two or more R₄₉ to R₅₆ adjacent to each other may be connected to each other to form a 1,1',4,4'-methyl-substituted cyclohexyl ring. Preferably, R₄₉ to R₅₆ may be hydrogen.

In Chemical Formulae 3 and 3-1, R₄₉, R₅₂, R₅₃, and R₅₆ may all be hydrogen.

Specifically, according to one embodiment of the present disclosure, specific examples of the compound represented by the Chemical Formula 3a include compounds represented by one of the following structural formulae, but the present invention is not limited thereto.

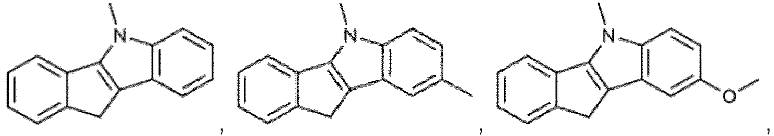

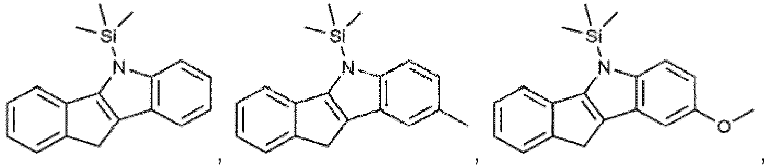

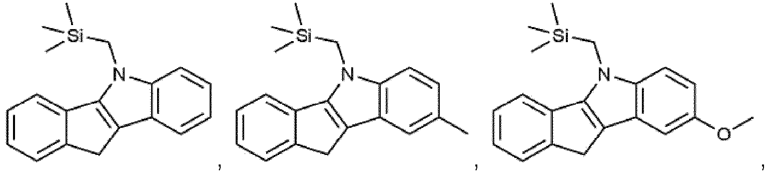

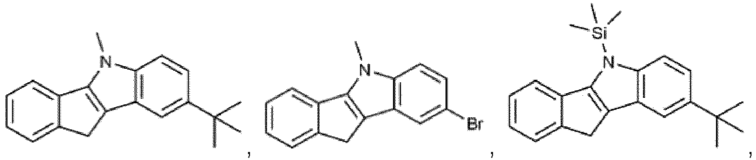

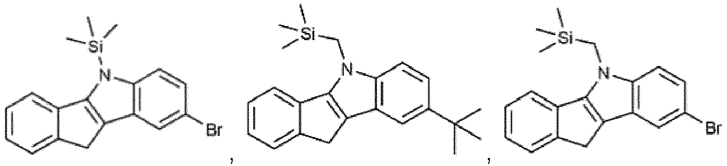

According to one embodiment of the present disclosure, specific examples of the compound represented by the Chemical Formula 3b include compounds represented by one of the following structural formulae, but the present invention is not limited thereto.

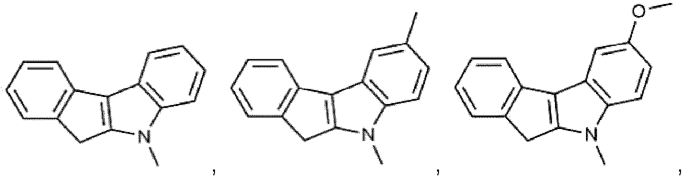

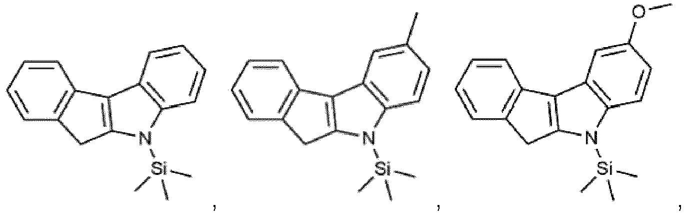

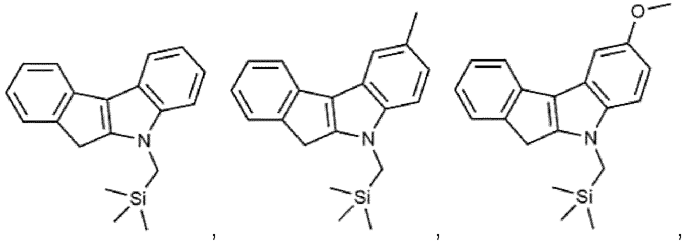

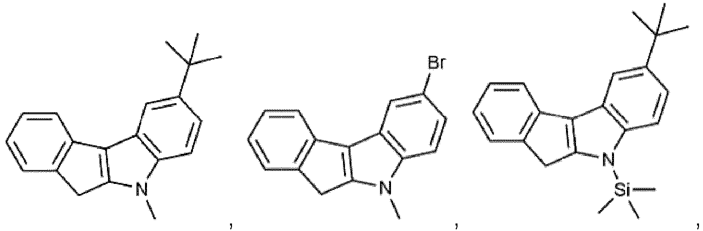

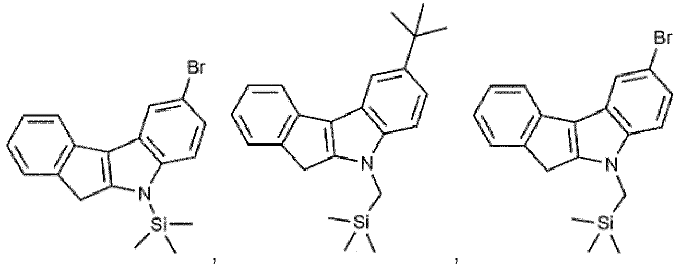

According to one embodiment of the present disclosure, specific examples of the compound represented by the Chemical Formula 3c include compounds represented by one of the following structural formulae, but the present invention is not limited thereto.

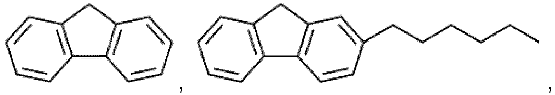

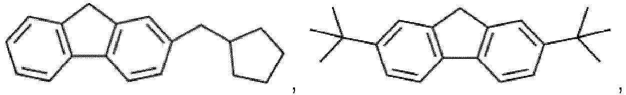

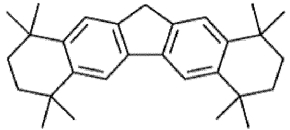

According to one embodiment of the present disclosure, specific examples of the third metallocene compound represented by the Chemical Formulae 3 and 3-1 include compounds represented by one of the following structural formulae, but the present invention is not limited thereto.

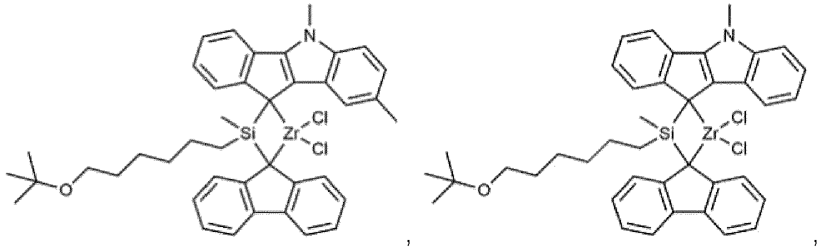

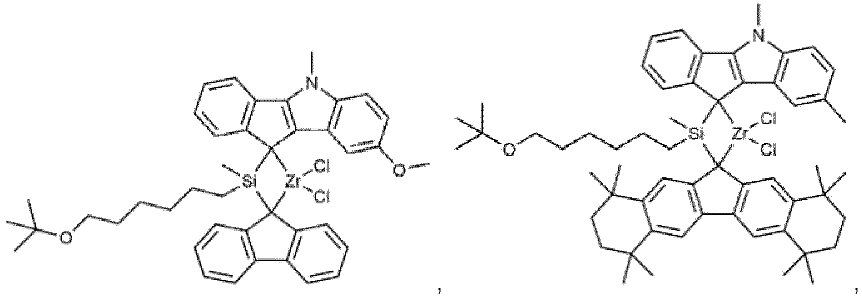

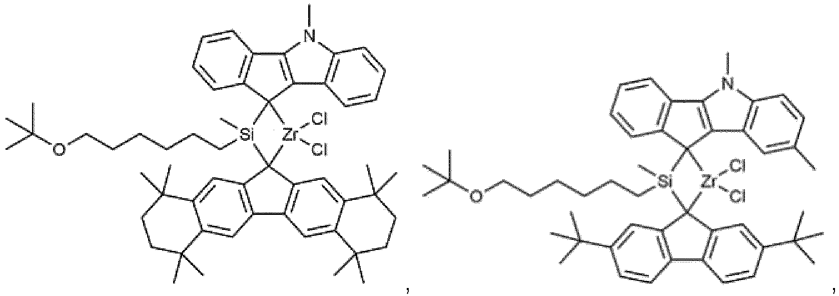

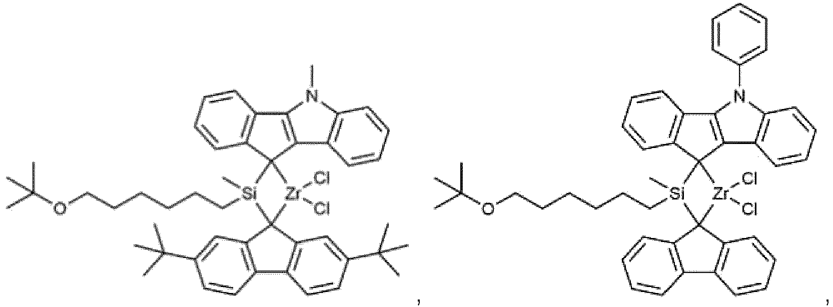

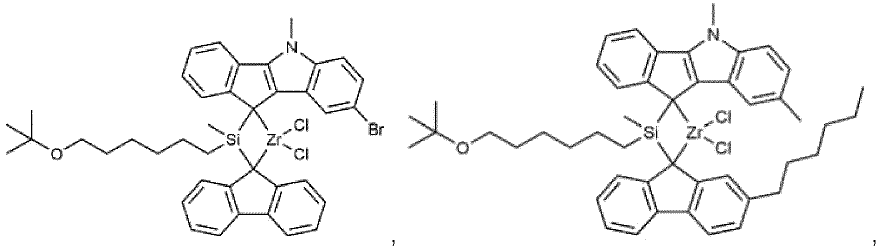

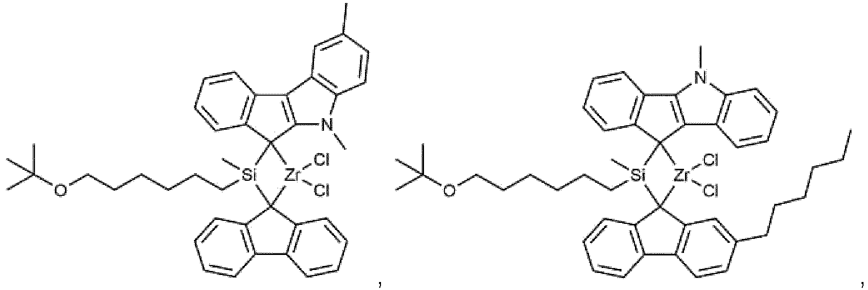

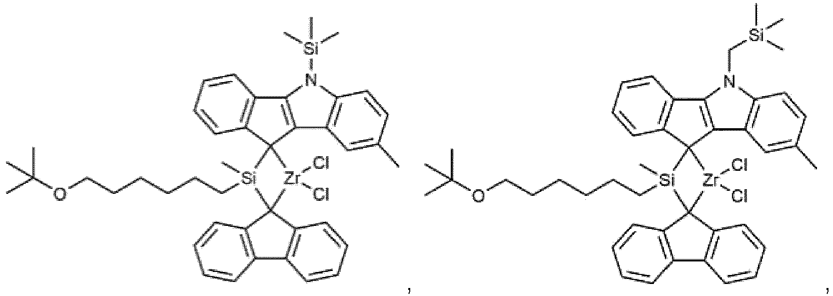

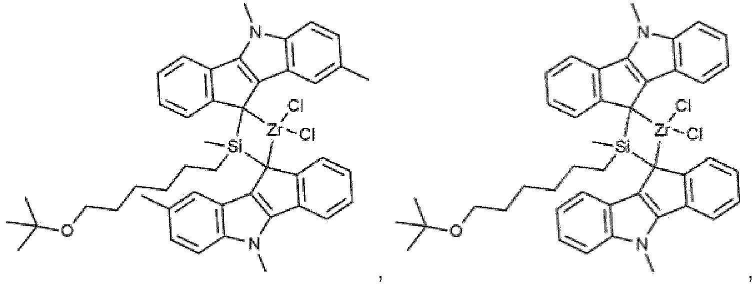

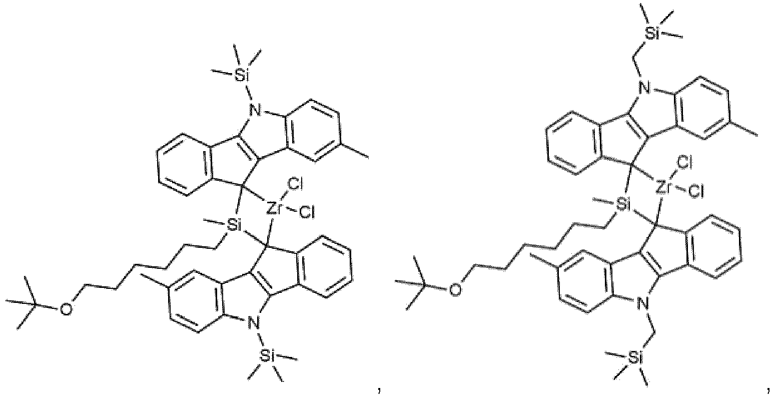

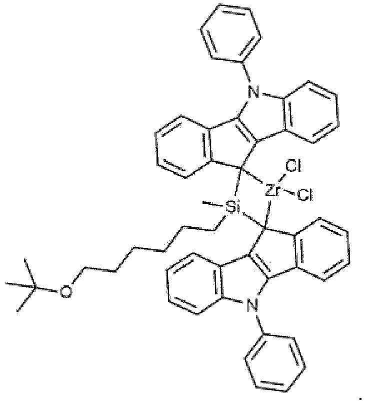

Preferably, the compound represented by the Chemical Formula 3 may be, for example, a compound represented by the following structural formula, but is not limited thereto.

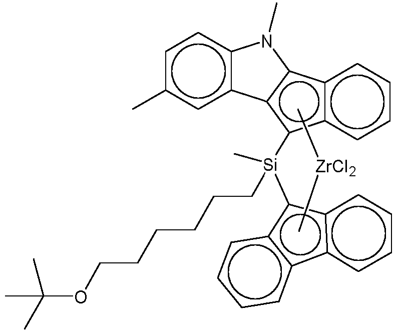

The third metallocene compound represented by the above structural formula may be synthesized by applying known reactions, and a more detailed synthesis method may be understood with reference to Examples.

In addition, the preparation method of the above-mentioned metallocene compounds was specifically described in Examples to be described later.

The metallocene catalyst used in the present disclosure may be supported on a support together with a cocatalyst compound.

The metallocene catalyst used in the present disclosure may be supported on a support together with a cocatalyst compound.

In the supported metallocene catalyst according to the present disclosure, the cocatalyst supported on a support to activate the metallocene compound is an organometallic compound containing a Group 13 metal. The cocatalyst is not particularly limited as long as it can be used when polymerizing olefins in the presence of a general metallocene catalyst.

The cocatalyst is an organometallic compound containing a Group 13 metal, and is not particularly limited as long as it can be used when polymerizing ethylene in the presence of a general metallocene catalyst.

Specifically, the cocatalyst may be one or more selected from the group consisting of compounds represented by Chemical Formulae 4 to 6 below.

[Chemical Formula 4] -[Al(R₆₀)-O]_{c}-

in Chemical Formula 4,
R₆₀ are each independently halogen; or C₁₋₂₀ hydrocarbyl unsubstituted or substituted with halogen, and
c is an integer of 2 or more,

   [Chemical Formula 5] D(R₆₁)₃

   in Chemical Formula 5,
   D is aluminum or boron, and
   R₆₁ are each independently hydrogen, halogen; or C₁₋₂₀ hydrocarbyl unsubstituted or substituted with halogen,

      [Chemical Formula 6] [L-H]⁺[Q(E)₄]⁻ or [L]⁺[Q(E)₄]⁻

      in Chemical Formula 6,
      L is a neutral or cationic Lewis base,
      H is a hydrogen atom,
      Q is a group 13 element, and
      E are each independently C₆₋₂₀ aryl or C₁₋₂₀ alkyl, wherein the C₆₋₂₀ aryl or C₁₋₂₀ alkyl is unsubstituted or substituted with at least one substituent selected from the group consisting of halogen, C₁₋₂₀ alkyl, C₁₋₂₀ alkoxy and C₆₋₂₀ aryloxy.

Specifically, in Chemical Formula 6, [L-H]⁺ is a Bronsted acid.

In addition, in Chemical Formula 6, Q may be B³⁺ or Al³.

The compound represented by the Chemical Formula 4 may function as an alkylating agent and an activating agent, the compound represented by the Chemical Formula 5 may function as an alkylating agent, and the compound represented by the Chemical Formula 6 may function as an activating agent.

The compound represented by the Chemical Formula 4 is not particularly limited as long as it is alkylaluminoxane, but may be, for example, methylaluminoxane, ethylaluminoxane, isobutylaluminoxane, butylaluminoxane, and the like. Preferably, it may be methylaluminoxane.

The compound represented by the Chemical Formula 5 is not particularly limited as long as it is an alkyl metal compound, but may be, for example, trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, trip-tolylaluminum, dimethylaluminummethoxide, dimethylaluminumethoxide, trimethylboron, triethylboron, triisobutylboron, tripropylboron, tributylboron, and the like. Preferably, it may be selected from trimethylaluminum, triethylaluminum, and triisobutylaluminum.

Examples of the compound represented by the Chemical Formula 6 may include triethylammonium tetraphenylboron, tributylammonium tetraphenylboron, trimethylammonium tetraphenylboron, tripropylammonium tetraphenylboron, trimethylammonium tetra(p-tolyl)boron, tripropylammonium tetra(p-tolyl)boron, triethylammonium tetra(o,p-dimethylphenyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-dimethylaniliniumtetraphenyl boron, N,N-diethylaniliniumtetraphenylboron, N,N-diethylaniliniumtetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-dimethylanilinium tetraphenylaluminum, N,N-diethylanilinium tetraphenylaluminum, N,N-diethylanilinium tetrapentafluorophenylaluminum, diethylammonium tetrapentafluorophenylaluminum, triphenylphosphonium tetraphenylaluminum, trimethylphosphonium tetraphenylaluminum, triphenylcarbonium tetraphenylboron, triphenylcarbonium tetraphenyl aluminum, triphenylcarbonium tetra(p-trifluoromethylphenyl)boron, triphenylcarbonium tetrapentafluorophenylboron, and the like.

Meanwhile, in the metallocene catalyst according to the present disclosure, a molar ratio of the cocatalyst and a sum of the metallocene compounds of Chemical Formulae 1 to 3 may be about 1:1 to about 1:10000. The molar ratio may preferably be about 1:1 to about 1: 1000, and may more preferably be about 1:10 to about 1:100. When the molar ratio is less than about 1, the metal content of the cocatalyst is too small, so the catalytically active species may not be well made, resulting in low activity. When the molar ratio exceeds about 10000, the metal of the cocatalyst may act as a catalyst poison.

The cocatalyst may be supported in an amount of about 3 mmol to 25 mmol, or about 5 mmol to 20 mmol based on 1 g of the support.

In the supported metallocene catalyst of the present disclosure, a support containing hydroxyl groups on its surface may be used. Preferably, a support containing highly reactive hydroxyl groups and siloxane groups, which has already been dried to remove moisture on the surface, may be used.

For example, silica, silica-alumina, and silica-magnesia dried at a high temperature may be used as the support, and they commonly contain oxide, carbonate, sulfate, and nitrate such as Na₂O, K₂CO₃, BaSO₄, Mg(NO₃)₂ and the like.

A drying temperature of the support may preferably be about 200 to 800 °C, more preferably about 300 to 600 °C, and most preferably about 300 to 400 °C. When the drying temperature of the support is less than 200 °C, surface moisture may react with the cocatalyst due to excessive moisture. When it is greater than 800 °C, pores on the surface of the support may be combined to reduce the surface area, and a lot of hydroxyl groups may be lost on the surface and only siloxane groups may remain, thus decreasing the reaction sites with the cocatalyst, which is not preferable.

The amount of the hydroxyl groups on the surface of the support may preferably be about 0.1 to 10 mmol/g, more preferably about 0.5 to 5 mmol/g. The amount of the hydroxyl groups on the surface of the support may be controlled by the preparation method and conditions of the support, or drying conditions, for example, temperature, time, vacuum, spray drying, or the like.

When the amount of the hydroxyl groups is less than about 0.1 mmol/g, the reaction sites with the cocatalyst may be little, and when it is greater than about 10 mmol/g, there is a possibility of being derived from moisture other than hydroxyl groups on the surface of the support particle, which is not preferable.

In the supported metallocene catalyst according to the present disclosure, a mass ratio of the total transition metals contained in the metallocene catalyst to the support may be about 1:10 to about 1:1000. When the support and the metallocene compounds are included within the above mass ratio, the optimal shape can be achieved. Additionally, the mass ratio of the cocatalyst compound to the support may be about 1:1 to about 1:100.

For example, the metallocene catalyst according to the present disclosure may be prepared by a method including the steps of supporting a cocatalyst on a support; supporting first to third metallocene compounds on the support on which the cocatalyst is supported; and preparing a metallocene catalyst including the support on which the cocatalyst and the metallocene compounds are supported.

In the above method, the supporting conditions are not particularly limited and the supporting step may be carried out within a range well known to those skilled in the art. For example, the supporting step may be carried out at a high temperature and at a low temperature appropriately. For example, the supporting temperature may be in a range of about -30 °C to about 150 °C, preferably in a range of about 50 °C to about 98 °C, or about 55 °C to about 95 °C. The supporting time may be appropriately controlled depending on the amount of the first to third metallocene compounds to be supported. The reacted supported catalyst may be used without further treatment after the reaction solvent is removed through filtration or distillation under reduced pressure, or subjected to Soxhlet filtering using aromatic hydrocarbon such as toluene, if necessary.

The preparation of the supported catalyst may be carried out in the presence of a solvent or without a solvent. When the solvent is used, it may include aliphatic hydrocarbon solvents such as hexane or pentane, aromatic hydrocarbon solvents such as toluene or benzene, chlorinated hydrocarbon solvents such as dichloromethane, ether solvents such as diethylether or tetrahydrofuran (THF), and common organic solvents such as acetone or ethylacetate. It is preferable to use hexane, heptane, toluene, or dichloromethane.

Meanwhile, the polyethylene according to one embodiment of the present disclosure may be prepared by a preparation method of a polyethylene including the step of polymerizing ethylene in the presence of a catalyst containing the first to third metallocene compounds.

For example, the ethylene polymerization reaction may be performed using a continuous slurry polymerization reactor, a loop slurry reactor, a gas phase reactor, or a solution reactor. For example, the ethylene polymerization reaction may be a slurry polymerization reaction using a continuous slurry polymerization reactor or a loop slurry reactor.

In particular, the polyethylene according to the present disclosure may be prepared by homopolymerizing ethylene or copolymerizing ethylene and alpha-olefin in the presence of at least one first metallocene compound represented by the above Chemical Formula 1; at least one second metallocene compound selected from compounds represented by the above Chemical Formula 2; and at least one third metallocene compound selected from compounds represented by the above Chemical Formula 3.

The alpha-olefin may be at least one selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and a mixture thereof.

As an example, the preparation method of a polyethylene according to the present disclosure may be performed by homopolymerizing ethylene without including the above-described alpha-olefin, or by copolymerizing ethylene with 10 wt% or less of the above-mentioned alpha-olefin. That is, the alpha-olefin may be included in an amount of 0 to 10 wt% or less. Specifically, the alpha-olefin may be included in an amount of 8 wt% or less, 6.5 wt% or less, 5 wt% or less, 4.5 wt% or less, 4 wt% or less, 3.5 wt% or less, 3 wt% or less, 2.5 wt% or less, 2.2 wt% or less, 2 wt% or less, 1.8 wt% or less, or 1.5 wt% or less, but is not limited thereto. In addition, when the polyethylene is an ethylene/alpha-olefin copolymer, the copolymerization step may be performed such that 0.1 wt% or more, 0.3 wt% or more, 0.5 wt% or more, 0.7 wt% or more, 0.85 wt% or more, 0.9 wt% or more, 1.0 wt% or more, or 1.2 wt% or more of the alpha-olefin reacts with ethylene, but is not limited thereto.

For example, when performing the copolymerization step with ethylene in the preparation method of a polyethylene copolymer, 1-hexene or 1-butene can be used as the alpha-olefin, and more specifically, 1-hexene can be used. For example, in the slurry polymerization, a polyethylene copolymer can be produced by polymerizing ethylene and 1-hexene.

Meanwhile, in the preparation method of a polyethylene according to the present disclosure, the molar ratio of the first metallocene compound, the second metallocene compound, and the third metallocene compound may be adjusted within the range that can improve mechanical properties such as environmental stress cracking resistance (ESCR) along with excellent compatibility with recycled polyethylene by optimizing both the molecular weight distribution and the weight average molecular weight while strengthening a high molecular region ratio and maintaining a low molecular region ratio in the molecular structure.

Specifically, a molar ratio of the first metallocene compound to the second metallocene compound may be 1:1 to 1:3, and a molar ratio of the first metallocene compound to the third metallocene compound may be 1:2 to 1:8. More specifically, the first metallocene compound to the second metallocene compound may be 1:1.2 to 1:2.5, 1:1.3 to 1:2.4, 1:1.4 to 1:2.2, or 1:1.5 to 1:2. Further, the molar ratio of the first metallocene compound to the third metallocene compound may be 1:2.2 to 1:7.8, 1:2.3 to 1:7.5, 1:2.4 to 1:7.3, or 1:2.5 to 1:7.

For example, the molar ratio of the first metallocene compound, the second metallocene compound, and the third metallocene compound may be 1:1:2 to 1:3:8, 1:1.2:2.2 to 1:2.5:7.8, 1:1.3:2.3 to 1:2.4:7.5, 1:1.4:2.4 to 1:2.2:7.4, or 1:1.5:2.5 to 1:2:7. Preferably, the molar ratio may be 1:1.5:2.5 to 1:2:7.

The molar ratio of the catalyst precursors may be the molar ratio described above in terms of improving mechanical properties such as environmental stress cracking resistance (ESCR) along with excellent compatibility with recycled polyethylene by realizing a high medium-to-high molecular region in the molecular structure.

In addition, the polymerization may be performed at a temperature of about 25 °C to about 500 °C, about 25 °C to about 300 °C, about 30 °C to about 200 °C, about 50 °C to about 150 °C, or about 60 °C to about 120 °C. In addition, the polymerization may be performed at a pressure of about 1 kgf/cm² to about 100 kgf/cm², about 1 kgf/cm² to about 50 kgf/cm², about 5 kgf/cm² to about 45 kgf/cm², about 10 kgf/cm² to about 40 kgf/cm², or about 15 kgf/cm² to about 35 kgf/cm².

In addition, the catalyst including the first to third metallocene compounds according to the present disclosure may be dissolved or diluted in a C5 to C12 aliphatic hydrocarbon solvent such as pentane, hexane, heptane, nonane, decane and an isomer thereof, in an aromatic hydrocarbon solvent such as toluene and benzene, or in a hydrocarbon solvent substituted with chlorine such as dichloromethane and chlorobenzene, and injected. The solvent used herein is preferably used after removing a small amount of water or air, which acts as a catalyst poison, by treating with a small amount of alkyl aluminum. It is also possible to further use the cocatalyst.

In the process for preparing the metallocene compound or the supported catalyst or in the ethylene polymerization reaction of the present disclosure, the equivalent weight (eq) refers to a molar equivalent weight (eq/mol).

Additionally, in the present disclosure, the polyethylene can be prepared by introducing hydrogen gas in the presence of a metallocene catalyst as described above. At this time, hydrogen gas can be used within the range capable of optimizing both the molecular weight distribution and the weight average molecular weight while strengthening a high molecular region ratio and maintaining a low molecular region ratio in the molecular structure of polyethylene obtained after polymerization.

For example, the polymerization step can be performed by introducing 70 ppm to 120 ppm of hydrogen gas based on the ethylene content. The ethylene content corresponds to the weight of ethylene introduced into the polymerization reactor. More specifically, the hydrogen gas may be introduced at about 72 ppm or more, about 74 ppm or more, about 76 ppm or more, about 78 ppm or more, or about 80 ppm or more, and about 118 ppm or less, about 116 ppm or less, about 114 ppm or less, about 112 ppm or less, or about 110 ppm or less. The hydrogen input may be maintained within the range described above in terms of improving mechanical properties such as environmental stress cracking resistance (ESCR) along with excellent compatibility with recycled polyethylene by realizing a high medium-to-high molecular region in the molecular structure of the polyethylene obtained after polymerization.

Further, the preparation method of the polyethylene includes the step of homopolymerizing ethylene or copolymerizing ethylene with an alpha-olefin while introducing hydrogen in the presence of a catalyst containing at least one first metallocene compound represented by Chemical Formula 1; at least one second metallocene compound represented by Chemical Formula 2; and at least one third metallocene compound represented by Chemical Formula 3. At this time, when the ethylene input is 10 ton/hr, the hydrogen input may be 700 g/hr or more and 1200 g/hr or less.

As the preparation method of a polyethylene is performed by slurry polymerization in the presence of the above-mentioned catalyst, polyethylene with excellent mechanical properties can be provided.

In particular, when polymerizing ethylene in the presence of a catalyst containing at least one metallocene compound of Chemical Formula 2 and at least one metallocene compound of Chemical Formula 3 along with the metallocene compound of Chemical Formula 1 according to the present disclosure, both the molecular weight distribution and the weight average molecular weight can be optimized while strengthening a high molecular region ratio and maintaining a low molecular region ratio in the molecular structure.

The polyethylene prepared by the method of one embodiment has the optimized molecular weight distribution and weight average molecular weight while maintaining a high molecular region ratio and a low molecular region ratio, thereby improving mechanical properties such as environmental stress cracking resistance (ESCR) along with excellent compatibility with recycled polyethylene. Accordingly, it can secure excellent impact strength, tensile strength, chemical resistance, and thermal stability close to those of virgin resin while increasing the recycled polyethylene content.

According to another embodiment of the present disclosure, there is provided a polyethylene composition including a recycled polyethylene resin (PCR) prepared by the method of one embodiment.

In particular, when using the polyethylene prepared by the above-described method according to the present disclosure, it is possible to manufacture a molded product with excellent processability and high mechanical properties even when an excessive amount of recycled polyethylene resin is used compared to the existing method.

As an example, the polyethylene composition may include 10 wt% to 90 wt% of the recycled polyethylene resin (PCR). In particular, the content of the recycled polyethylene resin (PCR) may be 20 wt% or more, 30 wt% or more, 35 wt% or more, 40 wt% or more, 45 wt% or more, 50 wt% or more, or 55 wt% or more in terms of improving the carbon dioxide emission suppression effect of the polyethylene composition and reducing costs. In addition, the content of the recycled polyethylene resin (PCR) may be 85 wt% or less, 80 wt% or less, 75 wt% or less, 70 wt% or less, 65 wt% or less, or 60 wt% or less in terms of improving mechanical properties such as impact strength, tensile strength, chemical resistance and thermal stability of the polyethylene composition and minimizing the virgin resin content. For example, the recycled polyethylene resin (PCR) may be included in an amount of 50 wt% to 70 wt%.

The recycled polyethylene resin (PCR) can be characterized as having a density of 0.940 g/cm³ to 0.960 g/cm³. More specifically, the density of the polyethylene may be 0.943 g/cm³ or more, 0.945 g/cm³ or more, 0.948 g/cm³ or more, or 0.950 g/cm³ or more, and 0.958 g/cm³ or less, 0.956 g/cm³ or less, 0.955 g/cm³ or less, or 0.953 g/cm³ or less.

In addition, the recycled polyethylene resin (PCR) may have a melt index (MI_{2.16}, 190 °C, measured under a load of 2.16 kg) of 0.4 g/10min to 0.7 g/10min.

In addition, the recycled polyethylene resin (PCR) may have environmental stress cracking resistance (ESCR) measured according to ASTM D 1693 of 40 hours to 50 hours.

According to the present disclosure, the polyethylene composition includes the polyethylene with optimized molecular weight distribution and weight average molecular weight while strengthening a high molecular region ratio and maintaining a low molecular region ratio in the molecular structure as a virgin resin as well as the recycled polyethylene resin (PCR) in order to improve mechanical properties such as environmental stress cracking resistance (ESCR) along with excellent compatibility with recycled polyethylene.

As an example, the polyethylene composition may include 90 wt% to 10 wt% of polyethylene as a virgin resin together with a recycled polyethylene resin (PCR). In particular, the content of polyethylene as the virgin resin can be minimized to 80 wt% or less, 70 wt% or less, 65 wt% or less, 60 wt% or less, 55 wt% or less, 50 wt% or less, or 45 wt% or less in terms of improving the carbon dioxide emission suppression effect of the polyethylene composition and reducing costs. In addition, the content of polyethylene as the virgin resin can be 15 wt% or more, 20 wt% or more, 25 wt% or more, 30 wt% or more, 35 wt% or more, or 40 wt% or more in terms of maximizing compatibility with recycled polyethylene and improving mechanical properties such as impact strength, tensile strength, chemical resistance, and thermal stability of the polyethylene composition. For example, the content of polyethylene as the virgin resin may be 50 wt% to 30 wt%.

The polyethylene composition according to the present disclosure can secure excellent impact strength, tensile strength, chemical resistance, and thermal stability close to those of virgin resin while increasing the recycled polyethylene content.

Specifically, the polyethylene composition may have notched constant ligament stress (NCLS) measured according to ASTM F 2136 of 7 hours or more or 7 hours to 20 hours.

More specifically, NCLS of the polyethylene composition may be 7.2 hours or more, 7.5 hours or more, 7.8 hours or more, 7.9 hours or more, 8 hours or more, 8.2 hours or more, 8.5 hours or more, 8.8 hours or more, 9 hours or more, 9.2 hours or more, 9.5 hours or more, 9.8 hours or more, 10 hours or more, 10.2 hours or more, 10.5 hours or more, 10.8 hours or more, 11 hours or more, or 11.5 hours or more, and 19 hours or less, 18 hours or less, 17.5 hours or less, 17 hours or less, 16.5 hours or less, 16 hours or less, 15.5 hours or less, 15 hours or less, 14.5 hours or less, 13 hours or less, 13.5 hours or less, 13 hours or less, 12.5 hours or less, or 12 hours or less.

Hereinafter, preferred examples are provided to aid in understanding the present invention. However, these examples are for illustrative purposes only, and the invention is not intended to be limited by these examples.

### <Examples>

### <Preparation of catalyst precursor>

### Synthesis Example 1: Preparation of first metallocene compound

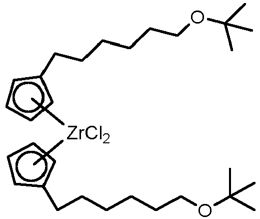

t-butyl-O-(CH₂)₆-Cl was prepared by the method shown in Tetrahedron Lett. 2951 (1988) using 6-chlorohexanol, and reacted with sodium cyclopentadienyl (NaCp) to obtain t-butyl-O-(CH₂)₆-C₅H₅ (yield 60%, b.p. 80 °C/0.1 mmHg).

In addition, t-butyl-O-(CH₂)₆-C₅H₅ was dissolved in tetrahydrofuran (THF) at -78 °C, and n-butyllithium (n-BuLi) was slowly added thereto. Thereafter, it was heated to room temperature and reacted for 8 hours. The lithium salt solution synthesized as described above was slowly added to a suspension solution of ZrCl₄(THF)₂ (170 g, 4.50 mmol)/THF(30 mL) at -78 °C, and further reacted for about 6 hours at room temperature. All volatiles were dried under vacuum and the resulting oily liquid material was filtered by adding a hexane solvent. The filtered solution was dried under vacuum, and hexane was added to obtain a precipitate at a low temperature (-20 °C). The obtained precipitate was filtered at a low temperature to obtain [t-butyl-O-(CH₂)₆-C₅H₄]₂ZrCl₂ compound in the form of a white solid (yield 92%).

¹H-NMR (300 MHz, CDCl₃): 6.28 (t, J=2.6 Hz, 2H), 6.19 (t, J=2.6 Hz, 2H), 3.31 (t, 6.6 Hz, 2H), 2.62 (t, J=8 Hz), 1.7 - 1.3 (m, 8H), 1.17 (s, 9H).

¹³C-NMR (CDCl₃): 135.09, 116.66, 112.28, 72.42, 61.52, 30.66, 30.31, 30.14, 29.18, 27.58, 26.00.

### Synthesis Example 2: Preparation of second metallocene compound

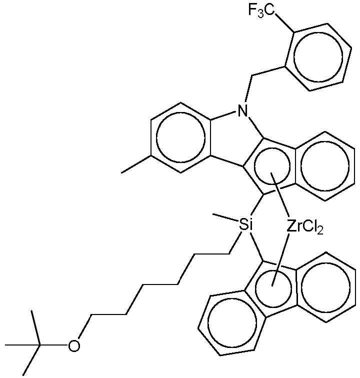

### 2-1 Preparation of ligand compound

2.9 g (7.4 mmol) of 8-methyl-5-(2-(trifluoromethyl)benzyl)-5,10-dihydroindeno[1,2-b]indole was dissolved in 100 mL of hexane and 2 mL (16.8 mmol) of MTBE (methyl tertiary butyl ether), and 3.2 mL (8.1 mmol) of 2.5 M n-BuLi hexane solution was added dropwise in a dry ice/acetone bath and stirred overnight at room temperature. In another 250 mL schlenk flask, 2 g (7.4 mmol) of (6-tert-butoxyhexyl)dichloro(methyl)silane was dissolved in 50 mL of hexane and added dropwise in a dry ice/acetone bath. Then, a lithiated slurry of 8-methyl-5-(2-(trifluoromethyl)benzyl)-5,10-dihydroindeno[1,2-b]indole was added dropwise through a cannula. After the injection, the mixture was slowly heated to room temperature and then stirred at room temperature overnight. At the same time, 1.2 g (7.4 mmol) of fluorene was also dissolved in 100 mL of tetrahydrofuran (THF), and 3.2 mL (8.1 mmol) of 2.5 M n-BuLi hexane solution was added dropwise in a dry ice/acetone bath, followed by stirring at room temperature overnight.

The reaction solution (Si solution) of 8-methyl-5-(2-(trifluoromethyl)benzyl)-5,10-dihydroindeno[1,2-b]indole and (6-(tert-butoxy)hexyl)dichloro(methyl)silane was confirmed by NMR sampling.

¹H NMR (500 MHz, CDCl₃): 7.74-6.49 (11H, m), 5.87 (2H, s), 4.05 (1H, d), 3.32 (2H, m), 3.49 (3H, s), 1.50-1.25(8H, m), 1.15 (9H, s), 0.50 (2H, m), 0.17 (3H, d).

After confirming the synthesis, the lithiated solution of fluorene was slowly added dropwise to the Si solution in a dry ice/acetone bath and stirred overnight at room temperature. After the reaction, it was extracted with ether/water and residual moisture of the organic layer was removed with MgSO₄. Then, the solvent was removed under vacuum reduced pressure to obtain 5.5 g (7.4 mmol) of an oily ligand compound, which was confirmed by 1H-NMR.

¹H NMR (500 MHz, CDCl₃): 7.89-6.53 (19H, m), 5.82 (2H, s), 4.26 (1H, d), 4.14-4.10 (1H, m), 3.19 (3H, s), 2.40 (3H, m), 1.35-1.21 (6H, m), 1.14 (9H, s), 0.97-0.9 (4H, m), -0.34 (3H, t).

### 2-2 Preparation of metallocene compound

5.4 g (Mw 742.00 g/mol, 7.4 mmol) of the ligand compound synthesized in 2-1 was dissolved in 80 mL of toluene and 3 mL (25.2 mmol) of MTBE, and 7.1 mL (17.8 mmol) of 2.5 M n-BuLi hexane solution was added dropwise in a dry ice/acetone bath, followed by stirring at room temperature overnight. 3.0 g (8.0 mmol) of ZrCl₄(THF)₂ was added to 80 mL of toluene to prepare a slurry. 80 mL of the toluene slurry of ZrCl₄(THF)₂ was transferred to a ligand-Li solution in a dry ice/ acetone bath and stirred at room temperature overnight.

After the reaction mixture was filtered to remove LiCl, the toluene of the filtrate was removed by vacuum drying, and then 100 mL of hexane was added thereto, followed by sonication for 1 hour. This was filtered to obtain 3.5 g (yield 52 mol%) of a purple metallocene compound as a filtered solid.

¹H NMR (500 MHz, CDCl₃): 7.90-6.69 (9H, m), 5.67 (2H, s), 3.37 (2H, m), 2.56 (3H, s), 2.13-1.51 (11H, m), 1.17 (9H, s).

### Synthesis Example 3

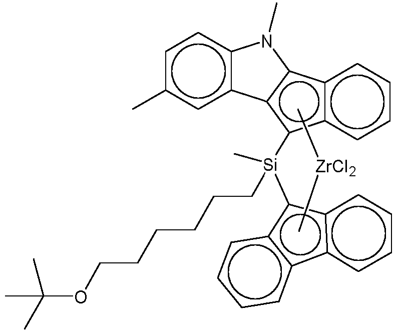

### 3-1 Preparation of ligand compound

2 g of fluorene was dissolved in 5 mL of MTBE and 100 mL of hexane, and 5.5 mL of a 2.5 M n-BuLi hexane solution was added dropwise in a dry ice/acetone bath, followed by stirring at room temperature overnight. 3.6 g of (6-(tert-butoxy)hexyl)dichloro(methyl)silane was dissolved in 50 mL of hexane, and the fluorene-Li slurry was transferred in a dry ice/acetone bath for 30 minutes, followed by stirring at room temperature overnight. At the same time, 5,8-dimethyl-5,10-dihydroindeno[1,2-b]indole (12 mmol, 2.8 g) was dissolved in 60 mL of THF and 5.5 mL of 2.5M n-BuLi hexane solution added dropwise in a dry ice/acetone bath, followed by stirring at room temperature overnight. After confirming the completion of the reaction by NMR sampling of the reaction solution of fluorene and (6-(tert-butoxy)hexyl)dichloro(methyl)silane, 5,8-dimethyl-5,10-dihydroindeno[1,2-b]indole-Li solution was transferred in a dry ice/acetone bath. Then, it was stirred at room temperature overnight. After the reaction, it was extracted with ether/water and residual moisture of the organic layer was removed with MgSO₄ to obtain a ligand compound (Mw 597.90, 12 mmol). Thereafter, it was confirmed that two isomers were generated by ¹H-NMR.

¹H NMR (500 MHz, d6-benzene): -0.30 - -0.18 (3H, d), 0.40 (2H, m), 0.65 - 1.45 (8H, m), 1.12 (9H, d), 2.36 - 2.40 (3H, d), 3.17 (2H, m), 3.41 - 3.43 (3H, d), 4.17 - 4.21 (1H, d), 4.34 - 4.38 (1H, d), 6.90 - 7.80 (15H, m).

### 3-2 Preparation of metallocene compound

7.2 g (12 mmol) of the ligand compound synthesized in 3-1 was dissolved in 50 mL of diethylether, and 11.5 mL of a 2.5 M n-BuLi hexane solution was added dropwise in a dry ice/acetone bath, followed by stirring at room temperature overnight. This was vacuum dried to obtain a brown sticky oil. It was dissolved in toluene to obtain a slurry. ZrCl₄(THF)₂ was prepared, and 50 mL of toluene was added thereto to prepare a slurry. The 50 mL toluene slurry of ZrCl₄(THF)₂ was transferred in a dry ice/acetone bath. As the slurry was stirred at room temperature overnight, the color changed to violet color. The reaction solution was filtered to remove LiCl. Toluene of the filtrate was removed by vacuum drying, and then hexane was added thereto, followed by sonication for 1 hour. The slurry was filtered to obtain 6 g (Mw 758.02, 7.92 mmol, yield 66 mol%) of a dark violet metallocene compound as a filtered solid. Two isomers were observed on ¹H-NMR.

¹H NMR (500 MHz, CDCl₃): 1.19 (9H, d), 1.71 (3H, d), 1.50 - 1.70(4H, m), 1.79(2H, m), 1.98 - 2.19(4H, m), 2.58(3H, s), 3.38 (2H, m), 3.91 (3H, d), 6.66 - 7.88 (15H, m).

### Comparative Synthesis Example 1

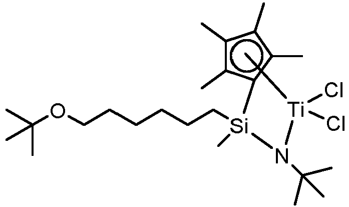

50 g of Mg (s) was added to a 10 L reactor at room temperature, followed by 300 mL of THF. 0.5 g of I₂ was added, and the reactor temperature was maintained at 50 °C. After the reactor temperature was stabilized, 250 g of 6-t-butoxyhexyl chloride was added to the reactor at a rate of 5 mL/min using a feeding pump. It was observed that the reactor temperature rose by 4 °C to 5 °C with the addition of 6-t-butoxyhexylchloride. It was stirred for 12 hours while continuously adding 6-t-butoxyhexylchloride to obtain a black reaction solution. 2 mL of the black solution was taken to which water was added to obtain an organic layer. The organic layer was confirmed to be 6-t-butoxyhexane through ¹H-NMR. From this, it was confirmed that Grignard reaction was well performed. Consequently, 6-t-butoxyhexyl magnesium chloride was synthesized.

500 g of MeSiCl₃ and 1 L of THF were introduced to a reactor, and then the reactor temperature was cooled down to -20 °C. 560 g of the 6-t-butoxyhexyl magnesium chloride synthesized above was added to the reactor at a rate of 5 mL/min using a feeding pump. After completion of the feeding of Grignard reagent, the mixture was stirred for 12 hours while slowly raising the reactor temperature to room temperature. Then, it was confirmed that white MgCl₂ salt was produced. 4 L of hexane was added thereto and the salt was removed through a large capacity filtration dryer (LABDORI^{®}) to obtain a filtered solution. After the filtered solution was added to the reactor, hexane was removed at 70 °C to obtain a pale yellow liquid. The obtained liquid was confirmed to be methyl(6-t-butoxyhexyl)dichlorosilane through ¹H-NMR.

¹H-NMR (CDCl₃): 3.3 (t, 2H), 1.5 (m, 3H), 1.3 (m, 5H), 1.2 (s, 9H), 1.1 (m, 2H), 0.7 (s, 3H).

1.2 mol (150 g) of tetramethylcyclopentadiene and 2.4 L of THF were added to the reactor, and then the reactor temperature was cooled down to -20 °C. 480 mL of n-BuLi was added to the reactor at a rate of 5 ml/min using a feeding pump. After n-BuLi was added, the mixture was stirred for 12 hours while slowly raising the reactor temperature to room temperature. Then, an equivalent of methyl(6-t-butoxyhexyl)dichlorosilane (326 g, 350 mL) was rapidly added to the reactor. The mixture was stirred for 12 hours while slowly raising the reactor temperature to room temperature. Then, the reactor temperature was cooled to 0 °C again, and 2 equivalents of t-BuNH₂ was added. The mixture was stirred for 12 hours while slowly raising the reactor temperature to room temperature. Then, THF was removed. Thereafter, 4 L of hexane was added and the salt was removed through a large capacity filtration dryer (LABDORI^{®}) to obtain a filtered solution. The filtered solution was added to the reactor again, and hexane was removed at 70 °C to obtain a yellow solution. The yellow solution obtained above was confirmed to be methyl(6-t-butoxyhexyl)(tetramethylCpH)t-butylaminosilane through ¹H-NMR.

TiCl₃(THF)₃ (10 mmol) was rapidly added to a dilithium salt of a ligand at -78 °C, which was synthesized from n-BuLi and the ligand of dimethyl(tetramethylCpH)t-butylaminosilane in THF solution. While slowly heating the reaction solution from -78 °C to room temperature, it was stirred for 12 hours. Then, an equivalent of PbCl₂ (10 mmol) was added to the reaction solution at room temperature, and then stirred for 12 hours to obtain a dark black solution having a blue color. After removing THF from the resulting reaction solution, hexane was added to filter the product. Hexane was removed from the filtered solution, and then the product was confirmed to be tBu-O-(CH₂)₆](CH₃)Si(C₅(CH₃)₄)(tBu-N)TiCl₂ through ¹H-NMR.

¹H-NMR (CDCl₃): 3.3 (s, 4H), 2.2 (s, 6H), 2.1 (s, 6H), 1.8 - 0.8 (m), 1.4 (s, 9H), 1.2 (s, 9H), 0.7 (s, 3H).

### [Hybrid supported catalyst]

### Preparation Example 1: Preparation of supported catalyst

6.0 kg of toluene solution was added to a 20 L stainless steel (sus) high pressure reactor, and the reactor temperature was maintained at 40 °C. 1000 g of silica (manufactured by Grace Davison, SYLOPOL 948) dehydrated at a temperature of 600 °C for 12 hours under vacuum was added to the reactor and sufficiently dispersed, and then 60 g of the first metallocene compound of Synthesis Example 1 dissolved in toluene was added, followed by stirring at 200 rpm for 2 hours at 40 °C. Afterwards, stirring was stopped, settling was performed for 30 minutes, and the reaction solution was decantated.

2.5 kg of toluene was added to the reactor, and 9.4 kg of 10 wt% methylaluminoxane (MAO)/toluene solution was added thereto, followed by stirring at 200 rpm for 12 hours at 40 °C. Thereafter, the stirring was stopped, followed by settling for 30 minutes and then decantation of the reaction solution. After 3.0 kg of toluene was added and stirred for 10 minutes, the stirring was stopped, followed by settling for 30 minutes and then decantation of the toluene solution.

After 3.0 kg of toluene was added to the reactor, 102 g of the second metallocene compound of Synthesis Example 2 was dissolved in 1 L of the toluene solution, and added thereto, followed by stirring at 200 rpm for 2 hours at 40 °C.

A solution was prepared by adding 383 g of the third metallocene compound of Synthesis Example 3 and 1 L of toluene in a flask, and sonication was performed for 30 minutes. The metallocene compound of Synthesis Example 3/toluene solution prepared in this way was added to the reactor and stirred at 200 rpm for 2 hours at 40 °C to react. After lowering the reactor temperature to room temperature, stirring was stopped, settling was performed for 30 minutes, and the reaction solution was decantated. At this time, the first metallocene compound of Synthesis Example 1, the second metallocene compound of Synthesis Example 2, and the third metallocene compound of Synthesis Example 3 were used at a molar ratio of 1:2:7.

2.0 kg of toluene was added to the reactor and stirred for 10 minutes. Then, the stirring was stopped, followed by settling for 30 minutes and then decantation of the reaction solution.

3.0 kg of hexane was added to the reactor, the hexane slurry was transferred to a filter drier, and the hexane solution was filtered. 1 kg-SiO₂ hybrid supported catalyst was prepared by drying under reduced pressure at 40 °C for 4 hours.

### Preparation Example 2: Preparation of supported catalyst

6.0 kg of toluene solution was added to a 20 L stainless steel (sus) high pressure reactor, and the reactor temperature was maintained at 40 °C. 1000 g of silica (manufactured by Grace Davison, SYLOPOL 948) dehydrated at a temperature of 600 °C for 12 hours under vacuum was added to the reactor and sufficiently dispersed, and then 121 g of the first metallocene compound of Synthesis Example 1 dissolved in toluene was added, followed by stirring at 200 rpm for 2 hours at 40 °C. Afterwards, stirring was stopped, settling was performed for 30 minutes, and the reaction solution was decantated.

2.5 kg of toluene was added to the reactor, and 9.4 kg of 10 wt% methylaluminoxane (MAO)/toluene solution was added thereto, followed by stirring at 200 rpm for 12 hours at 40 °C. Thereafter, the stirring was stopped, followed by settling for 30 minutes and then decantation of the reaction solution. After 3.0 kg of toluene was added and stirred for 10 minutes, the stirring was stopped, followed by settling for 30 minutes and then decantation of the toluene solution.

After 3.0 kg of toluene was added to the reactor, 154 g of the second metallocene compound of Synthesis Example 2 was dissolved in 1 L of the toluene solution, and added thereto, followed by stirring at 200 rpm for 2 hours at 40 °C.

A solution was prepared by adding 274 g of the third metallocene compound of Synthesis Example 3 and 1 L of toluene in a flask, and sonication was performed for 30 minutes. The metallocene compound of Synthesis Example 3/toluene solution prepared in this way was added to the reactor and stirred at 200 rpm for 2 hours at 40 °C to react. After lowering the reactor temperature to room temperature, stirring was stopped, settling was performed for 30 minutes, and the reaction solution was decantated. At this time, the first metallocene compound of Synthesis Example 1, the second metallocene compound of Synthesis Example 2, and the third metallocene compound of Synthesis Example 3 were used at a molar ratio of 2:3:5.

2.0 kg of toluene was added to the reactor and stirred for 10 minutes. Then, the stirring was stopped, followed by settling for 30 minutes and then decantation of the reaction solution.

3.0 kg of hexane was added to the reactor, the hexane slurry was transferred to a filter drier, and the hexane solution was filtered. 1 kg-SiO₂ hybrid supported catalyst was prepared by drying under reduced pressure at 40 °C for 4 hours.

### Comparative Preparation Example 1: Preparation of supported catalyst

5.0 kg of toluene solution was added to a 20 L stainless steel (sus) high pressure reactor, and the reactor temperature was maintained at 40 °C. 1000 g of silica (manufactured by Grace Davison, SYLOPOL 948) dehydrated at a temperature of 600 °C for 12 hours under vacuum was added to the reactor and sufficiently dispersed, and then 84 g of the metallocene compound of Synthesis Example 1 dissolved in toluene was added, followed by stirring at 200 rpm for 2 hours at 40 °C. Afterwards, stirring was stopped, settling was performed for 30 minutes, and the reaction solution was decantated.

2.5 kg of toluene was added to the reactor, and 9.4 kg of 10 wt% methylaluminoxane (MAO)/toluene solution was added thereto, followed by stirring at 200 rpm for 12 hours at 40 °C. Thereafter, the stirring was stopped, followed by settling for 30 minutes and then decantation of the reaction solution. After 3.0 kg of toluene was added and stirred for 10 minutes, the stirring was stopped, followed by settling for 30 minutes and then decantation of the toluene solution.

After 3.0 kg of toluene was added to the reactor, 116 g of the metallocene compound of Synthesis Example 2 was dissolved in 1 L of the toluene solution, and added thereto, followed by stirring at 200 rpm for 2 hours at 40 °C. After lowering the reactor temperature to room temperature, stirring was stopped, settling was performed for 30 minutes, and the reaction solution was decantated. At this time, the first metallocene compound of Synthesis Example 1, and the second metallocene compound of Synthesis Example 2 were used at a molar ratio of about 1.5:2.35.

2.0 kg of toluene was added to the reactor and stirred for 10 minutes. Then, the stirring was stopped, followed by settling for 30 minutes and then decantation of the reaction solution.

3.0 kg of hexane was added to the reactor, the hexane slurry was transferred to a filter drier, and the hexane solution was filtered. 1 kg-SiO₂ hybrid supported catalyst was prepared by drying under reduced pressure at 40 °C for 4 hours.

### Comparative Preparation Example 2: Preparation of supported catalyst

5.0 kg of toluene solution was added to a 20 L stainless steel (sus) high pressure reactor, and the reactor temperature was maintained at 40 °C. 1000 g of silica (manufactured by Grace Davison, SYLOPOL 948) dehydrated at a temperature of 600 °C for 12 hours under vacuum was added to the reactor and sufficiently dispersed, and then 121 g of the metallocene compound of Synthesis Example 1 dissolved in toluene was added, followed by stirring at 200 rpm for 2 hours at 40 °C. Afterwards, stirring was stopped, settling was performed for 30 minutes, and the reaction solution was decantated.

2.5 kg of toluene was added to the reactor, and 9.4 kg of 10 wt% methylaluminoxane (MAO)/toluene solution was added thereto, followed by stirring at 200 rpm for 12 hours at 40 °C. Thereafter, the stirring was stopped, followed by settling for 30 minutes and then decantation of the reaction solution. After 3.0 kg of toluene was added and stirred for 10 minutes, the stirring was stopped, followed by settling for 30 minutes and then decantation of the toluene solution.

After 3.0 kg of toluene was added to the reactor, 274 g of the metallocene compound of Synthesis Example 3 was dissolved in 1 L of the toluene solution, and added thereto, followed by stirring at 200 rpm for 2 hours at 40 °C. After lowering the reactor temperature to room temperature, stirring was stopped, settling was performed for 30 minutes, and the reaction solution was decantated. At this time, the first metallocene compound of Synthesis Example 1, and the third metallocene compound of Synthesis Example 3 were used at a molar ratio of about 2:5.

2.0 kg of toluene was added to the reactor and stirred for 10 minutes. Then, the stirring was stopped, followed by settling for 30 minutes and then decantation of the reaction solution.

3.0 kg of hexane was added to the reactor, the hexane slurry was transferred to a filter drier, and the hexane solution was filtered. 1 kg-SiO₂ hybrid supported catalyst was prepared by drying under reduced pressure at 40 °C for 4 hours.

### Comparative Preparation Example 3: Preparation of supported catalyst

3.0 kg of toluene solution was added to a 20 L stainless steel (sus) high pressure reactor, and the reactor temperature was maintained at 40 °C. 500 g of silica (SP2212, manufactured by Grace Davison) dehydrated at a temperature of 600 °C for 12 hours under vacuum was added to the reactor and sufficiently dispersed, and then 2.78 kg of a 10 wt% methylaluminoxane (MAO)/toluene solution was added thereto, followed by stirring at 200 rpm at 80 °C for 15 hours or more. After lowering the reactor temperature to 40 °C, 300 g of 7.5 wt% Synthesis Example 1/toluene solution was added to the reactor and stirred at 200 rpm for 1 hour. Then, 250 g of 8.8 wt% Synthesis Example 3/toluene solution was added to the reactor and stirred at 200 rpm for 1 hour. Comparative Synthesis Example 1 (20 g) was dissolved in toluene, and then added to the reactor, followed by stirring at 200 rpm for 2 hours. 70 g of a cocatalyst (anilinium tetrakis(pentafluorophenyl)borate) was diluted in toluene, and then added to the reactor, followed by stirring at 200 rpm for 15 hours or more. After lowering the reactor temperature to room temperature, the stirring was stopped, followed by settling for 30 minutes and decantation of the reaction solution. The toluene slurry was transferred to a filter dryer and filtered. After adding 3.0 kg of toluene and stirring for 10 minutes, the stirring was stopped and filtration was performed. After adding 3.0 kg of hexane to the reactor and stirring for 10 minutes, the stirring was stopped and filtration was performed. It was dried under reduced pressure at 50 °C for 4 hours to prepare 500g-SiO₂ hybrid supported catalyst.

### [Preparation of polyethylene]

### Example 1-1

The supported catalyst prepared in Preparation Example 1 was added to a single slurry polymerization process to prepare a high density polyethylene.

First, a 100 m³ reactor was charged with a flow rate of 25 ton/hr of hexane, 10 ton/hr of ethylene, and 10 kg/hr of triethylaluminum (TEAL), and a supported hybrid metallocene catalyst of Preparation Example 1 was injected to the reactor at 0.5 kg/hr. The polymerization process was carried out while introducing 800 g/hr of hydrogen, and the hydrogen input was 80 ppm based on the ethylene content. Thereafter, the ethylene was continuously reacted in a hexane slurry state at a reactor temperature of 82 °C and a pressure of 7.0 kg/cm² to 7.5 kg/cm². Then, it was subjected to solvent removal and drying to prepare a high density polyethylene of Example 1-1 in a powder form.

### Example 1-2

A high density polyethylene of Example 1-2 was prepared in the same manner as in Example 1-1, except that the supported catalyst prepared in Preparation Example 2 was added to the single slurry polymerization process instead of the supported catalyst prepared in Preparation Example 1.

### Example 3

A high density polyethylene was prepared by adding the supported catalyst prepared in Preparation Example 1 to the single slurry polymerization process.

First, a 100 m³ reactor was charged with a flow rate of 25 ton/hr of hexane, 10 ton/hr of ethylene, and 10 kg/hr of triethylaluminum (TEAL), and a supported hybrid metallocene catalyst of Preparation Example 1 was injected to the reactor at 0.5 kg/hr. The polymerization process was carried out while introducing 800 g/hr of hydrogen, and the hydrogen input was 80 ppm based on the ethylene content. The polymerization process was carried out while adding 1-hexene, and the 1-hexene comonomer content was 1.5 wt% based on the ethylene content.

Thereafter, the ethylene was continuously reacted in a hexane slurry state at a reactor temperature of 82 °C and a pressure of 7.0 kg/cm² to 7.5 kg/cm². Then, it was subjected to solvent removal and drying to prepare a high density polyethylene of Example 1-3 in a powder form.

### Example 1-4

A high density polyethylene of Example 1-4 was prepared in the same manner as in Example 1-3, except that the supported catalyst prepared in Preparation Example 2 was added to the single slurry polymerization process instead of the supported catalyst prepared in Preparation Example 1.

### Comparative Example 1-1

A commercially available high density polyethylene (HDPE) having a melt index (MI_{2.16}, 190 °C, 2.16 kg) of 0.37 g/10min prepared using a Ziegler-Natta (Z/N) catalyst (CE2030K, manufactured by LG Chem) was prepared as Comparative Example 1-1.

### Comparative Example 1-2

A commercially available high density polyethylene (HDPE) having a melt index (MI_{2.16}, 190 °C, 2.16 kg) of 0.35 g/10min prepared using a Ziegler-Natta (Z/N) catalyst (CE2080, manufactured by LG Chem) was prepared as Comparative Example 1-2.

### Comparative Example 1-3

A high density polyethylene of Comparative Example 1-3 was prepared in the same manner as in Example 1-1, except that the supported catalyst of Comparative Preparation Example 1, which does not contain the metallocene compound of Synthesis Example 3, was added to the single slurry polymerization process instead of the supported catalyst prepared in Preparation Example 1.

### Comparative Example 1-4

A high density polyethylene (HDPE) having a melt index (MI_{2.16}, 190 °C, 2.16 kg) of 0.59 g/10min prepared using a Ziegler-Natta (Z/N) catalyst was prepared as Comparative Example 1-4.

### Comparative Example 1-5

A high density polyethylene of Comparative Example 1-5 was prepared in the same manner as in Example 1, except that the supported catalyst of Comparative Preparation Example 2, which does not contain the metallocene compound of Synthesis Example 2, was added to the single slurry polymerization process instead of the supported catalyst prepared in Preparation Example 1.

### Comparative Example 1-6

A high density polyethylene of Comparative Example 1-6 was prepared using the hybrid supported metallocene catalyst of Comparative Preparation Example 3 and 1-butene as a comonomer with a hexane slurry stirred tank process polymerization reactor. Herein, bimodal operation was performed with two reactors (reactor R1 and R2).

Specifically, the ethylene input was 7.0 kg/hr, the pressure was 7.5 kg/cm², the temperature was 84.4 °C, and the hydrogen input was 3.1 g/hr in the first reactor R1, and the ethylene input was 6.0 kg/hr, the pressure was 4.7 kg/cm², the temperature was 75.2 °C, and the comonomer, 1-butene, input was 18.0 g/hr in the second reactor R2.

### <Test Example 1: Evaluation of physical properties of polyethylene>

The physical properties of the polyethylene prepared in Examples and Comparative Examples were measured by the method described below and are shown in Table 1.

### (1) Melt index

The melt index (MI_{2.16}) and melt index (MI_{21.6}) were measured under a load of 2.16 kg and 21.6, respectively, at 190 °C according to ASTM D 1238 (Condition E) of the American Society for Testing and Materials, and expressed as the weight (g) of the polymer melted for 10 minutes.

### (2) Melt flow rate ratio

The melt flow rate ratio (MI_{21.6}/MI_{2.16}, MFRR) was obtained by dividing MI_{21.6} melt index (MI, 21.6 kg load) by MI_{2.16} (MI, 2.16 kg load).

### (3) Density

The density (g/cm³) of the polyethylene was measured in accordance with ASTM D 1505.

### (4) ESCR

It was measured as the time taken to reach F50 (50% destruction) at a temperature of 50 °C using 10% IGEPAL^{®} CO-630 solution according to ASTM D 1693.

### (5) NCLS

It was measured as the time taken to reach F50 (50% destruction) at a temperature of 50 °C using 10% IGEPAL^{®} CO-630 solution according to ASTM F 2136.

### (6) Weight average molecular weight, polydispersity index (PDI, Mw/Mn) and Log MW (5.0 or more and 4.0 or less) ratio by GPC analysis

The weight average molecular weight (Mw) and the number average molecular weight (Mn) were measured by gel permeation chromatography (GPC, manufactured by Water), and the molecular weight distribution (PDI, Mw/Mn) was determined by dividing the weight average molecular weight by the number average molecular weight.

Specifically, PL-GPC220 manufactured by Waters was used as the gel permeation chromatography (GPC) instrument, and a Polymer Laboratories PLgel MIX-B 300 mm length column was used. An evaluation temperature was 160 °C, and 1,2,4-trichlorobenzene was used for a solvent at a flow rate of 1 mL/min. Each polymer sample of Examples and Comparative Examples was pretreated by dissolving in 1,2,4-trichlorobenzene containing 0.0125% of butylated hydroxytoluene (BHT) at 160 °C for 10 hours using a GPC analyzer (PL-GP220), and the sample with a concentration of 10 mg/10 mL was supplied in an amount of 200 µL. Mw and Mn were obtained using a calibration curve formed using a polystyrene standard. 9 kinds of the polystyrene standard were used with the molecular weight of 2000 g/mol, 10000 g/mol, 30000 g/mol, 70000 g/mol, 200000 g/mol, 700000 g/mol, 2000000 g/mol, 4000000 g/mol, and 10000000 g/mol.

Further, in the log graph of the weight average molecular weight (Mw) of polyethylene measured in this way, that is, in a GPC curve graph having an x-axis of log MW and a y-axis of dw/dlogMw, a ratio of an integral value in the region where Log MW is 5.0 or more to the total integral value (H Hw, unit: %) and a ratio of an integral value in the region where Log MW is 4.0 or less to the total integral value (L Mw, unit %) were calculated and shown in Table 1 below.

**[Table 1]**

| | MI_{2.16} (g/10mi n) | MFRR( MI_{21.6}/ MI_{2.16}) | Density (g/cm³) | ESCR (hr) | NCLS (hr) | Mw (x 10³ g/mol) | PDI (Mw/M n) | H Mw (log Mw≥5, %) | L Mw (log Mw≤4, %) |
|---|---|---|---|---|---|---|---|---|---|
| Example 1-1 | 0.40 | 65 | 0.955 | 182 | 15.7 | 494 | 9.3 | 75 | 12 |
| Example 1-2 | 0.50 | 55 | 0.956 | 143 | 12.3 | 354 | 11.2 | 66 | 16 |
| Example 1-3 | 0.45 | 68 | 0.944 | 286 | 18.3 | 462 | 9.2 | 73 | 14 |
| Example 1-4 | 0.55 | 60 | 0.945 | 223 | 15.4 | 333 | 11.4 | 65 | 15 |
| Comparativ e Example 1-1 | 0.37 | 87 | 0.955 | 87 | 5.5 | 192 | 4.5 | 36 | 45 |
| Comparativ e Example 1-2 | 0.35 | 98 | 0.957 | 95 | 8.7 | 156 | 8.5 | 27 | 55 |
| Comparativ e Example 1-3 | 0.30 | 75 | 0.952 | 111 | 10.2 | 231 | 4.1 | 54 | 11 |
| Comparativ e Example 1-4 | 0.59 | 42 | 0.953 | 130 | 6.3 | 150 | 7.5 | 67 | 19 |
| Comparativ e Example 1-5 | 0.68 | 87 | 0.951 | 120 | 7.7 | 345 | 10.3 | 51 | 37 |
| Comparativ e Example 1-6 | 0.23 | 33 | 0.945 | 290 | 10.1 | 239 | 21.5 | 48 | 19 |

Referring to Table 1, it was confirmed that the polyethylene of Examples 1-1 to 1-4 of the present disclosure uses a catalyst containing all three metallocene compounds of Synthesis Examples 1 to 3 to strengthen a high molecular region ratio and maintain a low molecular region ratio in the molecular structure, thereby optimizing both molecular weight distribution and weight average molecular weight.

### [Preparation of polyethylene composition mixed with recycled polyethylene]

High-density polyethylene prepared in one of Examples and Comparative Examples and recycled polyethylene resin (PCR, manufactured by Byucksan Plastics, melt index MI_{2.16} measured at 190 °C under a load of 2.16 kg: 0.4 to 0.7 g/10min, density: 0.940 tp 0.960 g/cm³) were mixed at 30 wt% to 50 wt% and 70 wt% to 50 wt%, respectively. Then, physical properties were evaluated in the same manner as previously described in the evaluation of the physical properties of polyethylene, and the measurement results are shown in Table 2 below.

**[Table 2]**

| | Polyethylen e type | Polyethyl ene content (wt%) | Recycled polyethyle ne resin (PCR) content (wt%) | MI_{2.16} (g/10min) | MFRR (MI_{21.6}/MI_{2 .16}) | Density (g/cm³) | NCLS (hr) |
|---|---|---|---|---|---|---|---|
| Example 2-1 | Example 1-1 | 50 | 50 | 0.47 | 85 | 0.958 | 10.3 |
| Example 2-2 | Example 1-1 | 30 | 70 | 0.50 | 91 | 0.959 | 8.8 |
| Example 2-3 | Example 1-2 | 50 | 50 | 0.53 | 82 | 0.958 | 9.2 |
| Example 2-4 | Example 1-2 | 30 | 70 | 0.55 | 88 | 0.959 | 7.9 |
| Example 2-5 | Example 1-3 | 50 | 50 | 0.53 | 82 | 0.948 | 9.2 |
| Example 2-6 | Example 1-3 | 30 | 70 | 0.55 | 88 | 0.950 | 7.9 |
| Example 2-7 | Example 1-4 | 50 | 50 | 0.55 | 83 | 0.948 | 11.8 |
| Example 2-8 | Example 1-4 | 30 | 70 | 0.56 | 89 | 0.951 | 9.9 |
| Comparativ e Example 2-1 | Comparativ e Example 1-1 | 50 | 50 | 0.47 | 92 | 0.958 | 3.7 |
| Comparativ e Example 2-2 | Comparativ e Example 1-2 | 50 | 50 | 0.46 | 108 | 0.959 | 5.5 |
| Comparativ e Example 2-3 | Comparativ e Example 1-3 | 50 | 50 | 0.45 | 95 | 0.955 | 6.2 |
| Comparativ e Example 2-4 | Comparativ e Example 1-4 | 50 | 50 | 0.58 | 67 | 0.957 | 4.8 |
| Comparativ e Example 2-5 | Comparativ e Example 1-5 | 50 | 50 | 0.61 | 93 | 0.957 | 5.2 |
| Comparativ e Example 2-6 | Comparativ e Example 1-6 | 50 | 50 | 0.42 | 68 | 0.949 | 5.9 |

Referring to Table 2, it can be seen that when the polyethylene prepared with a catalyst containing all three metallocene compounds of Synthesis Examples 1 to 3 is used in Examples 2-1 to 2-8 of the present disclosure, both the molecular weight distribution and the weight average molecular weight can be optimized while strengthening a high molecular region ratio and maintaining a low molecular region ratio in the molecular structure. Accordingly, even if the content of recycled polyethylene resin (PCR) increases, the notched constant ligament stress (NCLS), which is an indicator of mechanical properties such as environmental stress cracking resistance (ESCR), can be significantly improved along with excellent compatibility with recycled polyethylene.

## Claims

1. A polyethylene satisfying the following conditions:
an integral value in a region where Log Mw is 5.0 or more in a GPC curve graph having an x-axis of log Mw and a y-axis of dw/dlogMw is 60% or more of a total integral value,
a molecular weight distribution (Mw/Mn) is 7 or more, and
a weight average molecular weight is 300000 g/mol or more.

2. The polyethylene of Claim 1,
wherein the polyethylene comprises an ethylene homopolymer or an ethylene/alpha-olefin copolymer.

3. The polyethylene of Claim 1,
wherein the polyethylene has the integral value in the region where Log Mw is 5.0 or more in the GPC curve graph having the x-axis of log Mw and the y-axis of dw/dlogMw of 60% or more and less than 90% of the total integral value.

4. The polyethylene of Claim 1,
wherein the polyethylene has the integral value in the region where Log Mw is 4.0 or less in the GPC curve graph having the x-axis of log Mw and the y-axis of dw/dlogMw of 20% or less and 10% or more of the total integral value.

5. The polyethylene of Claim 1,
wherein the polyethylene has the molecular weight distribution (Mw/Mn) of 7 to 13.

6. The polyethylene of Claim 1,
wherein the polyethylene has the weight average molecular weight of 300000 g/mol to 1000000 g/mol.

7. The polyethylene of Claim 1,
wherein the polyethylene has a melt index (MI_{2.16}) measured at 190 °C under a load of 2.16 kg in accordance with ASTM D 1238 of 0.1 g/10min to 0.7 g/10min.

8. The polyethylene of Claim 1,
wherein the polyethylene has a melt flow rate ratio (MI_{21.6}/MI_{2.16}) measured at 190 °C in accordance with ASTM D 1238 of 40 to 80.

9. The polyethylene of Claim 1,
wherein the polyethylene has a density of 0.940 g/cm³ to 0.957 g/cm³.

10. The polyethylene of Claim 1,
wherein the polyethylene has Environmental Stress Crack Resistance (ESCR) measured in accordance with ASTM D 1693 of 120 hours or more.

11. The polyethylene of Claim 1,
wherein the polyethylene has Notched Constant Ligament-Stress (NCLS) measured in accordance with ASTM F 2136 of 11.5 hours or more.

12. A preparation method of the polyethylene according to any one of Claims 1 to 11, comprising the step of polymerizing ethylene in the presence of a catalyst containing at least one first metallocene compound represented by the following Chemical Formula 1; at least one second metallocene compound represented by the following Chemical Formula 2; and at least one third metallocene compound represented by the following Chemical Formula 3: 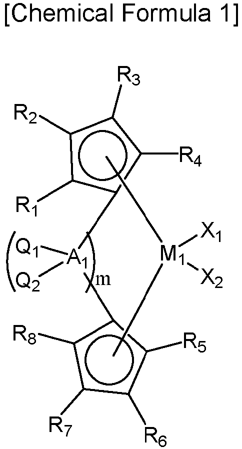 in Chemical Formula 1,
at least one of R₁ to R₈ is -(CH₂)ₙ-OR, wherein R is C₁₋₆ linear or branched alkyl, and n is an integer of 2 to 6,
the rest of R₁ to R₈ are the same as or different from each other, and are each independently a functional group selected from the group consisting of hydrogen, halogen, C₁₋₂₀ alkyl, C₂₋₂₀ alkenyl, C₆₋₂₀ aryl, C₇₋₄₀ alkylaryl, and C₇₋₄₀ arylalkyl, or two or more the rest of R₁ to R₈ adjacent to each other may be connected with each other to form a C₆₋₂₀ aliphatic or aromatic ring unsubstituted or substituted with a C₁₋₁₀ hydrocarbyl group,
Q₁ and Q₂ are the same as or different from each other, and are each independently hydrogen, halogen, C₁₋₂₀ alkyl, C₂₋₂₀ alkenyl, C₂₋₂₀ alkoxyalkyl, C₆₋₂₀ aryl, C₇₋₄₀ alkylaryl, or C₇₋₄₀ arylalkyl;
A₁ is carbon (C), silicon (Si), or germanium (Ge);
M₁ is a Group 4 transition metal;
X₁ and X₂ are the same as or different from each other, and are each independently halogen, C₁₋₂₀ alkyl, C₂₋₂₀ alkenyl, C₆₋₂₀ aryl, a nitro group, an amido group, C₁₋₂₀ alkylsilyl, C₁₋₂₀ alkoxy, or a C₁₋₂₀ sulfonate group; and
m is 0 or 1, 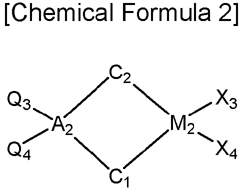
in Chemical Formula 2,
Q₃ and Q₄ are the same as or different from each other, and are each independently hydrogen, halogen, C₁₋₂₀ alkyl, C₂₋₂₀ alkenyl, C₂₋₂₀ alkoxyalkyl, C₆₋₂₀ aryl, C₇₋₄₀ alkylaryl, or C₇₋₄₀ arylalkyl;
A₂ is carbon (C), silicon (Si), or germanium (Ge);
M₂ is a Group 4 transition metal;
X₃ and X₄ are the same as or different from each other, and are each independently halogen, C₁₋₂₀ alkyl, C₂₋₂₀ alkenyl, C₆₋₂₀ aryl, a nitro group, an amido group, C₁₋₂₀ alkylsilyl, C₁₋₂₀ alkoxy, or a C₁₋₂₀ sulfonate group; and
any one of C₁ and C₂ is represented by the following Chemical Formula 2a or 2b, and the other of C₁ and C₂ is represented by the following Chemical Formula 2c, 2d, or 2e, 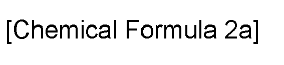 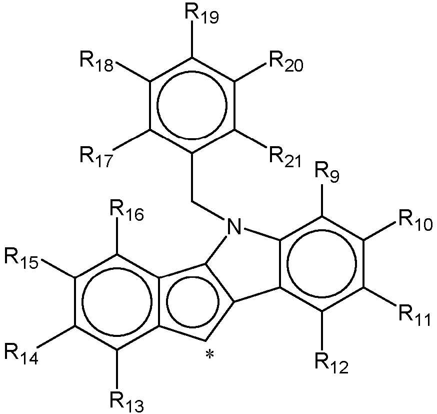 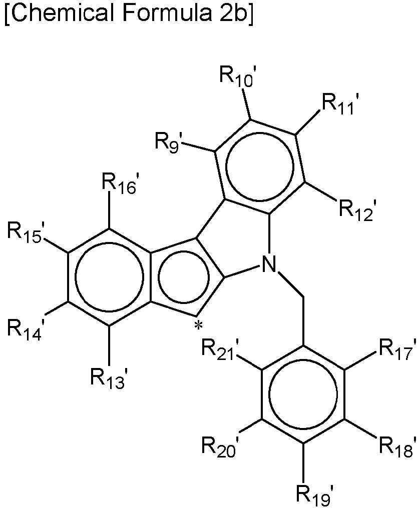 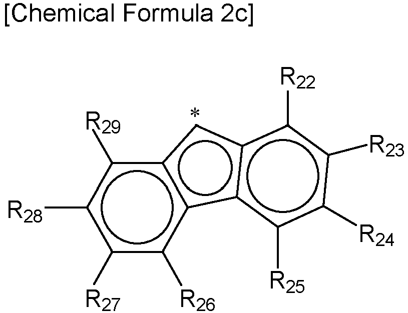 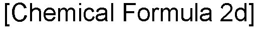 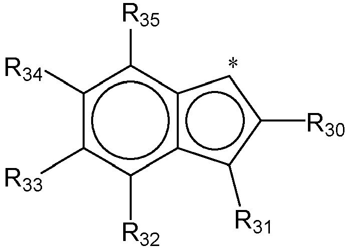 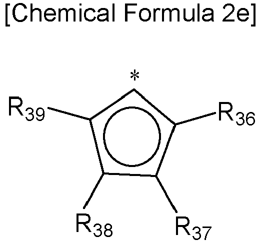
in Chemical Formulae 2a, 2b, 2c, 2d and 2e, R₉ to R₃₉ and R₉' to R₂₁' are the same as or different from each other, and are each independently hydrogen, halogen, C₁₋₂₀ alkyl, C₁₋₂₀ haloalkyl, C₂₋₂₀ alkenyl, C₁₋₂₀ alkylsilyl, C₁₋₂₀ alkylsilylalkylene, C₁₋₂₀ alkoxysilyl, C₁₋₂₀ alkoxy, C₆₋₂₀ aryl, C₇₋₄₀ alkylaryl, or C₇₋₄₀ arylalkyl, provided that at least one of R₁₇ to R₂₁ and R₁₇' to R₂₁' is C₁₋₂₀ haloalkyl,
two or more R₂₂ to R₃₉ adjacent to each other may be connected with each other to form a C₆₋₂₀ aliphatic or aromatic ring unsubstituted or substituted with a C₁₋₁₀ hydrocarbyl group; and
* represents a site of binding to A₂ and M₂, 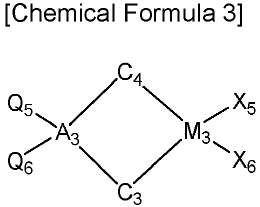
in Chemical Formula 3,
Q₅ and Q₆ are the same as or different from each other, and are each independently hydrogen, halogen, C₁₋₂₀ alkyl, C₂₋₂₀ alkenyl, C₂₋₂₀ alkoxyalkyl, C₆₋₂₀ aryl, C₇₋₄₀ alkylaryl, or C₇₋₄₀ arylalkyl;
A₃ is carbon (C), silicon (Si), or germanium (Ge);
M₃ is a Group 4 transition metal;
X₅ and X₆ are the same as or different from each other, and are each independently halogen, C₁₋₂₀ alkyl, C₂₋₂₀ alkenyl, C₆₋₂₀ aryl, a nitro group, an amido group, C₁₋₂₀ alkylsilyl, C₁₋₂₀ alkoxy, or a C₁₋₂₀ sulfonate group; and
any one of C₃ and C₄ is represented by Chemical Formula 3a, 3b, or 3c, provided that at least one of C₃ and C₄ is not represented by Chemical Formula 3c, 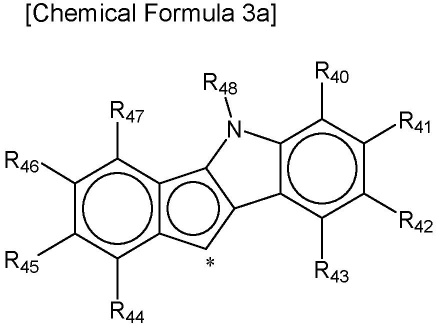 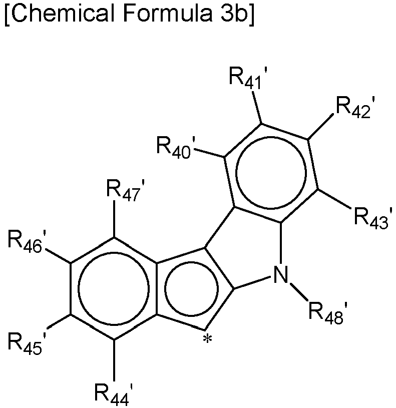 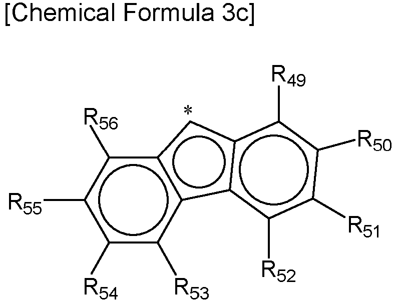
in Chemical Formulae 3a and 3b, R₄₀ to R₄₇ and R₄₀' to R₄₇' are the same as or different from each other, and are each independently hydrogen, halogen, C₁₋₂₀ alkyl, C₁₋₂₀ haloalkyl, C₂₋₂₀ alkenyl, C₁₋₂₀ alkylsilyl, C₁₋₂₀ alkylsilylalkylene, C₁₋₂₀ alkoxysilyl, C₁₋₂₀ alkoxy, C₆₋₂₀ aryl, C₇₋₄₀ alkylaryl, or C₇₋₄₀ arylalkyl, and
R₄₈ and R₄₈' are the same as or different from each other, and are each independently C₁₋₂₀ alkyl, C₁₋₂₀ alkylsilyl, C₁₋₂₀ alkylsilylalkylene, C₁₋₂₀ alkoxysilyl, or C₁₋₂₀ alkoxy;
in Chemical Formula 3c, R₄₉ to R₅₆ are the same as or different from each other, and are each independently hydrogen, halogen, C₁₋₂₀ alkyl, C₁₋₂₀ haloalkyl, C₂₋₂₀ alkenyl, C₁₋₂₀ alkylsilyl, C₁₋₂₀ alkylsilylalkylene, C₁₋₂₀ alkoxysilyl, C₁₋₂₀ alkoxy, C₆₋₂₀ aryl, C₇₋₄₀ alkylaryl, or C₇₋₄₀ arylalkyl, or two or more R₄₉ to R₅₆ adjacent to each other may be connected with each other to form a substituted or unsubstituted aliphatic ring, or a substituted or unsubstituted aromatic ring; and
* represents a site of binding to A₃ and M₃.

13. The preparation method of the polyethylene of Claim 12,
wherein the first metallocene compound is represented by any one of the following Chemical Formulae 1-1 to 1-4: 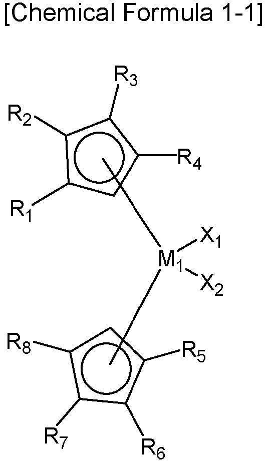 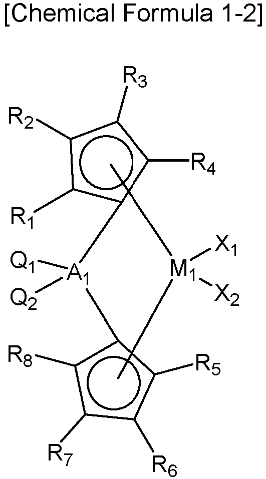 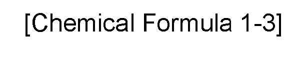 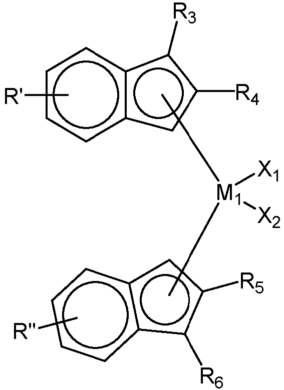 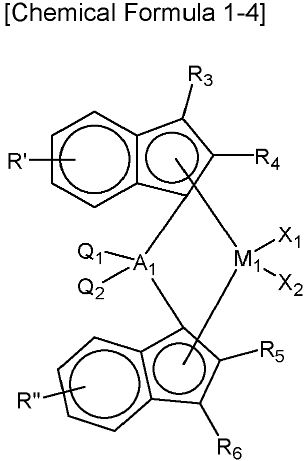
in Chemical Formulae 1-1 to 1-4,
Q₁, Q₂, A₁, M₁, X₁, X₂, and R₁ to R₈ are as defined in Claim 12, and
R' and R" are the same as or different from each other, and are each independently hydrogen or a C₁₋₁₀ hydrocarbyl group.

14. The preparation method of the polyethylene of Claim 12,
wherein each of R₃ and R₆ is C₁₋₆ alkyl, or C₂₋₆ alkyl substituted with C₁₋₆ alkoxy.

15. The preparation method of the polyethylene of Claim 12,
wherein the second metallocene compound is represented by the following Chemical Formula 2-1: 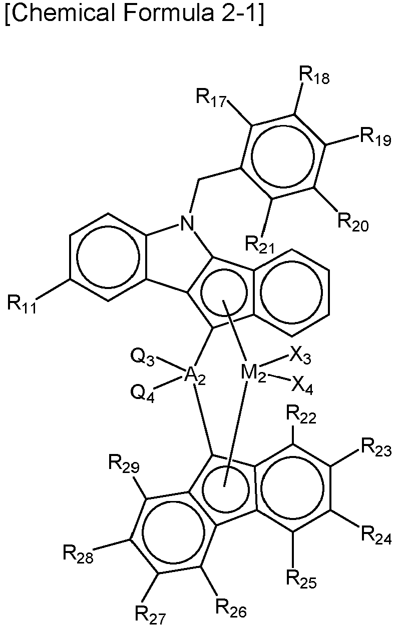
in Chemical Formula 2-1,
Q₃, Q₄, A₂, M₂, X₃, X₄, R₁₁, R₁₇ to R₂₁, and R₂₂ to R₂₉ are as defined in Claim 12.

16. The preparation method of the polyethylene of Claim 12,
wherein each of R₁₇ to R₂₁ and R₁₇' to R_{21'} is hydrogen or C₁₋₆ haloalkyl, provided that at least one of R₁₇ to R₂₁ and R₁₇' to R_{21'} is C₁₋₆ haloalkyl.

17. The preparation method of the polyethylene of Claim 12,
wherein the third metallocene compound is represented by the following Chemical Formula 3-1: 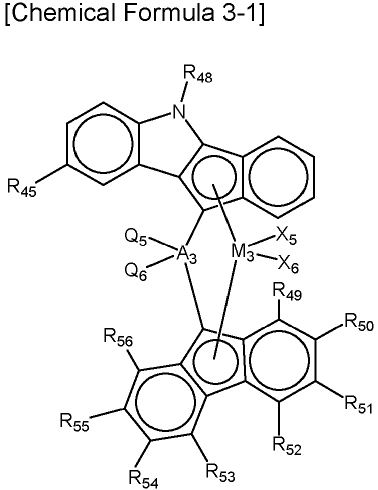
in Chemical Formula 3-1,
Q₅, Q₆, A₃, M₃, X₅, X₆, R₄₅, R₄₈, and R₄₉ to R₅₆ are as defined in Claim 12.

18. The preparation method of the polyethylene of Claim 12,
wherein each of R₄₅ and R_{45'} is hydrogen, halogen, C₁₋₆ alkyl, or C₁₋₆ alkoxy.

19. The preparation method of the polyethylene of Claim 12,
wherein each of R₄₈ and R_{48'} is C₁₋₆ alkyl, C₁₋₆ alkylsilyl, C₁₋₆ alkylsilylalkylene, or C₆₋₁₂ aryl.

20. The preparation method of the polyethylene of Claim 12,
wherein a molar ratio of the first metallocene compound to the second metallocene compound is 1:1 to 1:3, and
a molar ratio of the first metallocene compound to the third metallocene compound is 1:2 to 1:8.

21. The preparation method of the polyethylene of Claim 12,
wherein the polymerization step is performed by introducing hydrogen gas at 70 ppm to 120 ppm based on the ethylene content.

22. A polyethylene composition comprising the polyethylene according to any one of Claims 1 to 11 and a recycled polyethylene resin (PCR).

23. The polyethylene composition of Claim 22,
wherein the recycled polyethylene resin (PCR) is included in an amount of 10 wt% to 90 wt%.

24. The polyethylene composition of Claim 22,
wherein the recycled polyethylene resin (PCR) has a density of 0.940 g/cm³ to 0.960 g/cm³.

25. The polyethylene composition of Claim 22,
wherein the polyethylene composition has Notched Constant Ligament-Stress (NCLS) measured in accordance with ASTM F 2136 of 7 hours or more.
